# EUROPEAN PATENT SPECIFICATION

(11) **EP 2 174 766 B1**
(45) Date of publication and mention of the grant of the patent: **28.08.2013**
(21) Application number: 08791299.4
(22) Date of filing: 17.07.2008
(51) Int. Cl.: B29C 45/14, C23F 1/28, B29K 67/00, B29K 81/00, B29K 105/22, B29C 65/00

(54) **COMPOSITE OF METAL WITH RESIN AND PROCESS FOR PRODUCING THE SAME**
VERBUNDSTOFF AUS EINEM METALL UND EINEM HARZ SOWIE HERSTELLUNGSVERFAHREN DAFÜR
COMPOSITE D'UN MÉTAL AVEC UNE RÉSINE ET PROCÉDÉ DE PRODUCTION

(30) Priority: 17.07.2007 JP 2007185547
(43) Date of publication of application: 14.04.2010
(73) Proprietor: Taisei Plas Co., Ltd., Tokyo, 103-0007 (JP)
(72) Inventor: NARITOMI, Masanori, Tokyo 103-0023 (JP); ANDO, Naoki, Tokyo 103-0023 (JP)
(74) Representative: Wiebusch, Manfred
(86) International application number: PCT/JP2008/062945
(87) International publication number: WO 2009/011398

(56) References cited:
- EP-A1- 1 559 541
- EP-A1- 1 559 542
- WO-A1-2008/081933
- JP-A- 2003 170 531
- JP-A- 2003 170 531
- JP-A- 2004 249 681
- JP-A- 2004 249 681
- JP-A- 2007 144 795
- US-A- 5 500 459
- US-A1- 2005 228 157
- US-A1- 2007 029 702
- US-A1- 2007 089 949
- ANONYMOUS: "Process to enhance the adhesion of a polymer film to a steel alloy surface", RESEARCH DISCLOSURE, MASON PUBLICATIONS, HAMPSHIRE, GB, vol. 293, no. 54, 1 September 1988 (1988-09-01), XP007112934, ISSN: 0374-4353

## Description

### FIELD OF THE INVENTION

The present invention relates to a composite that is used ordinarily in transport equipment, electric equipment, medical equipment, general machinery and in other manufacturing fields and relates also to a technology for manufacturing such a composite. More particularly, the present invention relates to a composite in which a ferrous material shaped article, shaped by various mechanical shaping processes, is integrated with a thermoplastic resin composition.

### BACKGROUND OF THE INVENTION

Document JP 2003170531 A discloses a metal and resin composite, comprising the features of claim 1, Similar composites are disclosed by JP 2004249 681 A and JP 2407144795 A. A corresponding method for manufacturing a metal and resin composite is disclosed by US 200510228157 A1, US 2007/0029702 A1 and US 2007/0089949 A1.

Technologies for integrating metals with synthetic resins are required in a wide variety of industrial fields, for instance in manufacturing automotive parts, domestic appliances, industrial machinery or the like, for which numerous adhesives have been developed. Various excellent adhesives are known among these adhesives. For instance, adhesives, which bring out their functionality at normal temperature or upon heating, are used to integrally bond a metal and a synthetic resin. This method constitutes a standard joining technique used at present.

However, more rational joining technologies that do not rely on adhesives have also been developed. Examples of such technologies include, for instance, methods for integrating light metals, such as magnesium, aluminum or alloys thereof, or ferrous alloys such as stainless steel, with high-strength engineering resins, without any intervening adhesive. For instance, the present inventors have proposed a method (hereafter, "injection joining") wherein molten resin is injected onto an etched metal shaped article that is placed beforehand, as an insert, in a metallic mold for injection molding to elicit simultaneous molding of the resin portion and fixing (joining) between the resulting metal shaped article and the molded product.

Such a joining technology is an integration technology in which, for instance, a polybutylene terephthalate resin (hereafter, "PBT") or polyphenylene sulfide resin (hereafter, "PPS") is joined by injection joining with an aluminum alloy (for instance, see Japanese Patent Application Laid-open No. 2004-216425: Patent Document 1). A joining technology has also been disclosed in which large holes are formed on the anodized skin of an aluminum material and a synthetic resin body is forced into the holes to be joined thereby to the aluminum material (for instance, see WO 2004-055248 A1: Patent Document 2).

The principles of the injection joining disclosed in Patent Document 1 are as follows. An aluminum alloy shaped article is immersed in a dilute aqueous solution of a water-soluble amine compound, whereupon the aluminum alloy shaped article is finely etched by the weak base in the aqueous solution. It has been found that the above immersion results in simultaneous adsorption of amine compound molecules onto the surface of the aluminum alloy shaped article. The aluminum alloy shaped article thus treated is inserted into a metallic mold for injection molding, into which a molten thermoplastic resin is then injected at high pressure.

Heat is generated thereupon on account of the encounter of the thermoplastic resin and the amine compound molecules that are adsorbed onto the surface of the aluminum alloy shaped article. Substantially simultaneously with this heat generation, the thermoplastic resin comes into contact with the aluminum alloy shaped article that is held at a low mold temperature, whereupon the thermoplastic resin is cooled down quickly. Owing to exothermic phenomena, the resin that would solidify through crystallization experiences a delay in solidification and remains in the molten state. The molten resin penetrates into the ultra-fine recesses on the surface of the aluminum alloy shaped article. The resin solidifies after penetrating into the recesses. The aluminum alloy shaped article and the thermoplastic resin become solidly joined (hereafter, also referred to as "fixed") thereby, in such a manner that the resin may not be detached from the surface of the aluminum alloy shaped article.

That is, strong injection joining can be achieved thanks to an exothermic reaction. Indeed, compounds such as PBT and PPS, which react exothermically with amine compounds, have been found to allow injection joining with aluminum alloys. The technique itself in which a metal part, having been chemically etched beforehand, is inserted into a mold where injection joining is then carried out using a thermoplastic resin material, is well known (for instance, see Japanese Patent Application Laid-open No. 2001-225352: Patent Document 3). Although contingent on shape conditions, the above technique relates nonetheless to injection joining.

The technical principle disclosed in Patent Document 1 by the inventors is distinctively effective for aluminum alloys but the effectiveness in injection joining for metals other than aluminum alloys, in particular ferrous materials, is not so distinctive. This demanded, therefore, the development of a novel joining technology for ferrous materials. The inventors found a new technique while working at improving injection joining of hard resins with aluminum alloys. Specifically, the inventors identified conditions under which injection joining is possible without chemical adsorption of amine compounds onto the surface of a metal part, i.e. without resorting to the aid from a special exothermic reaction or of a specific chemical reaction.

At least two such conditions must be met. One condition requires the use of a hard, highly crystalline resin, such as PPS, PBT or an aromatic polyamide. This is however not sufficient and the resins must be used in the form of an improved composition tailored for injection joining. The other condition relates to the metal alloy and requires that the surface layer of the metal part should have a properly rough shape and that the surface should be hard.

The gist of the above rough shape is a doubly-textured roughness structure that comprises irregularities of a period ranging from 1 to 10 µm (micron-scale period) and fine irregularities having a period of several tens to several hundreds of nm, formed at least on the inner wall face of the recesses of the micron-scale irregularities. Further, the surface having such a roughness is a thin layer of a metal oxide or a metal phosphate, i.e. a high-hardness ceramic substance.

The thickness of the thin layer need only range from ten to several tens of nm. In metals whose natural oxide layer exhibits corrosion resistance, the thin layer is preferably thicker than the natural oxide layer. In metals whose natural oxide layer has insufficient corrosion resistance, such as magnesium alloys and ordinary steel materials, a surface layer is preferably formed by a conversion treatment or the like, which comprises, for instance, an oxide or a phosphate of a metal different from the underlying metal. In brief, the prerequisite herein is such that the surface layer is formed of a ceramic substance harder than the metal.

To achieve a high-hardness ceramic substance in the case of, for instance, a shaped article of copper alloy as the base material, the shaped article is subjected to chemical etching by being immersed in an acidic aqueous solution of hydrogen peroxide, whereupon copper is oxidized to be copper ions. As a result, if the immersion conditions are suitable, chemical etching is performed so that the base material acquires a roughness made up of irregularities of a period of several µm. Next, the chemically etched copper alloy shaped article is immersed in a strongly basic aqueous solution of sodium chlorite, whereupon, although copper is oxidized, the copper ions cannot dissolve. As a result, the surface becomes covered by a thin layer of cupric oxide. Electron microscopy observation of the structure revealed that the surface is covered with fine irregularities in the form of recesses (openings) that have a diameter of several tens to several hundreds of nm at a period of several hundreds of nm. The thin layer of cupric oxide is a ceramic substance, thus the copper alloy shaped article after completion of the above treatment satisfies the condition stipulated above.

An explanation follows next on the situation of injection joining in an instance where a resin is injected into a metallic mold for injection molding into which the above copper alloy shaped article was inserted. The temperature of the mold during injection joining is set to about 120 to 140°C. The copper alloy shaped article inserted into the mold is held at a temperature lower than the melting point of the injected resin (about 250°C for PBT and about 300°C for PPS) by 100°C or more. Therefore, the injected resin is cooled rapidly upon entering passages inside the mold for injection molding, so that there is a high likelihood where the the temperature of the resin is at or below the melting point by the time it comes near the copper alloy part.

Irrespective of the crystalline resin, when it is cooled rapidly from a molten state down to a temperature at or below the melting point of the resin, there is a time when the resin is not crystallized and solidified in zero time but persists in a supercooled state, i.e. in a molten state at or below the melting point, even though it be a very short time. When the roughness of alloy shaped article is of micron scale, i.e. when the diameter of the recesses as defined in the present invention is of about 1 to 10 µm, the molten resin can penetrate into the recesses during the limited time from supercooling to early crystallization, i.e. to formation of micro-crystals. The resin flow can reach the bottom of the recesses if the depth of the latter is about half the diameter of the recesses, even if viscosity increases rapidly on account of micro-crystal formation in gross after penetration of the resin into the recesses. In other words, the resin can sufficiently penetrate into recesses having inner diameters of several µm when the number density of polymer micro-crystal clusters formed is still small.

That is, fine irregularities having a diameter of several tens to several hundreds of nm are formed on the inner walls of micron-scale recesses on the metal alloy. In the case of the pure-copper alloy mentioned above, a more accurate description of the fine irregularities would involve the observation of a peculiar surface with fine irregularities in which innumerable dot hole-like recesses of a diameter of about 100 nm are distributed. The resin flow that penetrates into the micron-scale recesses may fail to reach the bottom of the fine openings having such a diameter of about 100 nm but can conceivably get to a certain depth past the mouth of the fine openings. Thereafter, the resin having penetrated into the recesses becomes completely solidified to be micro-crystals, grown crystals and a non-crystalline solid filling the gaps between crystal clusters.

It is estimated that the resin, after having been crystallized and solidified within the micron-scale recesses, has small roots poking into the fine openings in the inner wall face of the recesses. When the metal surface layer that constitutes the fine openings is copper oxide, i.e. a surface layer of a hard ceramic substance, the surface becomes strongly joined to the resin through locking of the resin having protruded into the recesses, so that the metal surface layer may not be detached readily from the resin. Since both the metal and the resin are hard, the solidified resin is difficult to be pulled out of the recesses, even in attempts to forcibly strip the solidified resin off the metal alloy part. A higher injection joining strength is thus achieved.

Improvement of the resin composition that is joined by injection joining is also an important element in the present invention. Specifically, the resin composition used in the present invention is a resin composition for injection molding whose crystallization rate is sufficiently slow during rapid cooling from a molten state to a temperature at or below the melting point. Use of such a resin composition brings about greater injection joining strength.

Considering the above-described conditions, the inventors found out that joinability can be achieved with a greater joining strength by chemically etching a copper alloy shaped article, as described above, coupled with a surface treatment, such as an oxidation treatment, to impart ceramic hardness to the surface layer, onto which a hard crystalline resin is joined by injection joining subsequently (see WO 2008/069252 A1: Patent Document 4). The theoretical explanation of the above described injection joining imposes no limitation on metal type and indeed the feasibility of injection joining has been demonstrated in practice for systems of other than copper alloys, for instance, of magnesium alloys, titanium alloys and stainless steel (see WO 2008/047811 A1: Patent Document 5, PCT/JP 2007/074749: Patent Document 6 and PCT/JP 2007/075287: Patent Document 7).

The above findings indicate that any metal or metal alloy can be joined by injection joining using a crystalline resin such as PBT or PPS improved for injection joining, provided that at least the surface configuration and surface layer characteristics of the metal or metal alloy are the same. Although the feasibility of injection joining has been demonstrated for ordinary steel materials, methods for preserving durability of the joined-integrated products require further experimentation, which has delayed the disclosure of such methods. The present invention discloses injection joining technologies relating to ordinary steel materials.

Patent Document 3 discloses a method for manufacturing a battery cap having lead wires attached thereto, in which plurality of copper wires extend through the central portion of a PPS disc and which is obtained by injecting PPS into a metallic mold for injection molding where chemically etched copper wires were inserted. The shape of the irregularities (roughness) in the surface of the chemically etched copper wires is the characterizing feature with which gas is prevented from leaking through the lead wire portion, even in case of rising inner-pressure of the gas formed in the battery. Although the technology disclosed in Patent Document 3 is at first sight similar to the above-described injection joining technology that has been laid out in detail by the present inventors, the technologies are nonetheless different. The technology disclosed in Patent Document 3 is an extension of ordinary injection molding and does not involve the metal surface treatment according to the present invention. This technology merely utilizes differences between the coefficient of linear expansion of a metal and the molding shrinkage of a resin.

In injection molding of a resin that is molded around a metallic rod-like material that extends through the resin, demolding of the molded product off the metallic mold for injection molding and subsequent cooling of the molded product have an effect of causing the metal rod portion to be tightly clamped to the resin molded portion. The reason for this is that the coefficient of linear expansion of the metal ranges at most from 1.7 to 2.5×10⁻⁵°C⁻¹ for aluminum alloys, magnesium alloys, copper and copper alloys, thus the extent of shrinkage upon demolding and cooling to room temperature, being the coefficient of linear expansion times about a hundred and several tens °C, does not exceed 0.2 to 0.3%. By contrast, the shrinkage of the molded resin is about 1% for PPS and 0.5% for PPS reinforced with glass fibers. Even in the case of a resin containing increased filler, the thermal shrinkage of the resin after injection molding is necessarily greater than that of the metal part.

Therefore, injection molding of a shaped article, using a metal part in the middle as an insert such that the metal part extends through the resin portion, has an effect of tightening the whole on account of the thermal shrinkage of the resin portion after molding. An integrated product can be manufactured as a result from which the metal portion does not come loose easily. Such method, in which an integrated product of a metal and a resin are manufactured by taking advantage of thermal shrinkage, is known conventionally. Knobs on fuel oil stoves, for example, are manufactured in accordance with such a method, which involves inserting a thick iron wire with a diameter of about 2 mm into a metallic mold for injection molding and injecting a heat resistant resin or the like into the mold.

In this method, jagged bumps (resulting from knurling) are formed around the outer peripheral face of the wire, so that the injected resin becomes fixed to the bumps without coming off the latter. Patent Document 3 indicates that surface configuration is smoothed with irregularities made finer by changing the texturing process from a physical process, such as knurling or the like, to a chemical process, and indicates that the gripping effect is improved by using a resin that is both hard and crystalline. The clinging effect by the resin, however, is not a prerequisite at all in the inventions by the present inventors relating to injection joining.

The present invention is a technique wherein injection joining of a hard resin is possible even on a flat surface of an ordinary steel material. The coefficient of linear expansion of ordinary steel materials is of about 1×10⁻⁵°C⁻¹, i.e. about half that of the above-described aluminum alloys, copper alloys and so forth. Although ferrous materials are not as lightweight as aluminum alloys and the like, integration of ferrous materials with resins, as is the case with light alloys, can yield joined composites having a wide variety of uses. With this in mind, the inventors have conducted diligent research directed at making it possible to apply techniques relating to the present invention also to ferrous materials. In this context, the inventors have researched and developed techniques for ordinary steel materials, considering that there is a high likelihood that ordinary steel materials can be used if the temperature range for use is narrow.

The specific gravity of ordinary steel materials is about 7.9. Steel materials are hard, strong and inexpensive materials. Their corrosion resistance is insufficient, while overcoming this drawback would open up a wider range of applications for the materials. Accordingly, a well-grounded composite technology for ordinary steel materials would allow the materials to be widely used in wide fields of electronic and electric devices, medical instruments, vehicle mounted devices and other ordinary mechanical parts.

The joining principles underlying the present invention will be reviewed in the explanation below. The above-described features relating to joining technology, which stem from the same inventors, rely on joining principles that are derived from a comparatively simple joining theory. These joining principles will be explained taking aluminum alloys as an example. The theory encompasses an "NMT (Nano molding technology)" theoretical hypothesis, so named by the inventors, relating to injection joining of aluminum alloys and a "new NMT" theoretical hypothesis relating to injection joining of all metal alloys.

The theoretical hypothesis "new NMT", advanced by one of the inventors and applicable to a wider scope, posits the following. The strong joining force brought out in injection joining requires that both the metal and the injected resin meet several conditions respectively. As for the metal, it must meet the conditions below. Specifically, the metal alloy must meet three conditions, as follows.

As to the first condition, the chemically etched metal alloy should have a rough surface (surface roughness) having a texture of a period of 1 to 10 µm and a profile height difference of about half the period, i.e. 0.5 to 5 µm. Causing such roughness to accurately cover the entire surface is difficult to achieve in practice owing to variability inherent to unsteady chemical reactions. In concrete terms, the above-mentioned roughness conditions are found to be substantially met when the rough surface exhibits a texture of irregular period from 0.2 to 20 µm and a roughness curve having a maximum height difference ranging from 0.2 to 5 µm, as observed using a profilometer (surface roughness meter), or when the rough surface exhibits an average period, i.e. a peak-valley average spacing (RSm) of 1 to 10 µm and a maximum height roughness (Rz) of 0.2 to 5 µm, according to JIS Standards (JIS B 0601:2001), based on scanning analysis using a scanning probe microscope.

The period of the irregular shapes of the ideal rough surface ranges from 1 to 10 µm, as described above, so the inventors refer to the surface with this range of roughness as a "surface of micron-scale roughness" in an easily understandable definition. It constitutes the second condition that the inner wall face of the recesses in the surface has ultra-fine irregularities of a period not smaller than 10 nm, preferably a period of 50 nm, as a result of an oxidation treatment or the like. Further, it constitutes the third condition that the above rough surface of the metal alloy is a ceramic substance, specifically a corrosion resistance native oxide layer, a thin layer of a metal oxide or a metal phosphate that is thicker than a natural oxide layer.

Meanwhile, the injected resin is subject to the following conditions. As regards the conditions of the injected resin, suitable resins that can be used are hard crystalline resins, having a slow crystallization rate upon rapid cooling, for instance through compounding with other appropriate polymers. Use of a resin composition, which has a delayed crystallization rate upon rapid cooling, results in stable and strong injection joining. The reason for this is omitted here since it was already explained above. The specific resin used is a resin composition having as a main component a hard, highly crystalline resin such as PBT or PPS, compounded with appropriate other polymers, glass fibers and so forth. These resin compositions can be joined by injection joining using ordinary injection molding machines and metallic molds for injection molding.

### SUMMARY OF THE INVENTION

To achieve the above goal, the present invention encompasses the aspects below.
A metal and resin composite according to Invention 1 comprises a ferrous material shaped article having micron-scale roughness resulting from chemical etching, the surface being covered substantially completely with ultra-fine irregularities shaped as an endless succession of steps having a height and length of 50 to 500 nm and a width of several hundred to several thousand nm and the surface being a thin layer of a natural oxide of iron onto which one or more compounds selected from among hydrazine, ammonia and water-soluble amine is chemically adsorbed; and a high-hardness crystalline resin composition, joined to and integrated with the ferrous material shaped article by injection molding.

A metal and resin composite according to Invention 2 comprises a ferrous material shaped article having micron-scale roughness resulting from chemical etching, the surface being covered substantially completely with ultra-fine irregularities shaped as an endless succession of steps having a height and length of 50 to 500 nm and a width of several hundred to several thousand nm and the surface being covered by a thin layer of a metal oxide or metal phosphate of a nonferrous metal; and a high-hardness crystalline resin composition joined to and integrated with the ferrous material shaped article by injection molding.

A metal and resin composite according to Invention 3 is the metal and resin composite according to Invention 1 or 2, wherein the high-hardness crystalline resin composition is a resin having a polyphenylene sulfide resin as a main component.

A metal and resin composite according to Invention 4 is the metal and resin composite according to Invention 1 or 2, wherein the high-hardness crystalline resin composition is a resin having a polybutylene terephthalate resin as a main component.

A metal and resin composite according to Invention 5 is the metal and resin composite according to Invention 2, wherein the thin layer of the metal oxide or the metal phosphate is a thin layer of one compound selected from among manganese oxide, chromium oxide and zinc phosphate.

A metal and resin composite according to Invention 6 is the metal and resin composite according to Invention 1 or 2, wherein the chemical etching is chemical etching carried out by use of an aqueous solution of a non-oxidizing strong acid.

A metal and resin composite according to Invention 7 is the metal and resin composite according to Invention 3, wherein the resin having the polyphenylene sulfide resin as a main component is a resin containing the polyphenylene sulfide resin by 70 to 97wt% and a polyolefin by 3 to 30wt%.

A metal and resin composite according to Invention 8 is the metal and resin composite according to Invention 4, wherein the resin having the polybutylene terephthalate resin as a main component is a resin containing the polybutylene terephthalate resin by 70 to 97wt% and a polyethylene terephthalate resin and/or a polyolefin resin by 3 to 30wt%.

A metal and resin composite according to Invention 9 is the metal and resin composite according to Invention 1 or 2, wherein the high-hardness crystalline resin composition is a resin composition containing one or more fillers by 20 to 60wt% selected from among glass fibers, carbon fibers, aramid fibers, calcium carbonate, magnesium carbonate, silica, talc, clay and glass powder.

A method for manufacturing a metal and resin composite according to Invention 10 comprises: a shaping step of mechanically shaping a ferrous material into a shaped article; a liquid treatment step including a chemical etching treatment for causing the surface of the ferrous material shaped article to have an ultra-fine texture bristling with protrusions having a height, width and length of 10 nm or more, at a spacing period of 10 nm or more, and to exhibit a roughness having a maximum height difference of 0.2 to 5 µm made up of the textured surface having a period of 1 to 10 µm; an immersion step of immersing the ferrous material shaped article that has undergone the liquid treatment step in an aqueous solution of one compound selected from among ammonia, hydrazine and a water-soluble amine compound; an insertion step of inserting the ferrous material shaped article that has undergone the immersion step into an injection mold; and an integration step of forming a composite by injecting a high-hardness crystalline resin composition onto the surface of the inserted ferrous material shaped article to join and integrate the ferrous material shaped article with the high-hardness crystalline resin composition.

A method for manufacturing a metal and resin composite according to Invention 11 comprises: a shaping step of mechanically shaping a ferrous material; a liquid treatment step including a chemical etching treatment for causing the surface of the ferrous material shaped article to have an ultra-fine texture bristling with protrusions having a height, width and length of 10 nm or more, at a spacing period of 10 nm or more, and to exhibit a roughness having a maximum height difference of 0.2 to 5 µm made up of the textured surface having a period of 1 to 10 µm; a conversion treatment step of immersing the ferrous material shaped article that has undergone the liquid treatment step in an aqueous solution containing one compound selected from among chromic acid, a permanganate salt and zinc phosphate; an insertion step of inserting the ferrous material shaped article that has undergone the conversion treatment step into an injection mold; and an integration step of forming a composite by injecting a high-hardness crystalline resin composition onto the surface of the inserted ferrous material shaped article to join and integrate the ferrous material shaped article with the high-hardness crystalline resin composition.

A method for manufacturing a metal and resin composite according to Invention 12 comprises: a shaping step of mechanically shaping a ferrous material into a shaped article; a chemical etching step of immersing the ferrous material shaped article in an aqueous solution of sulfuric acid; an immersion step of immersing the ferrous material formed-article that has undergone the chemical etching step, in an aqueous solution of one compound selected from among ammonia, hydrazine and a water-soluble amine compound; an insertion step of inserting the ferrous material shaped article that has undergone the immersion step into an injection mold; and an integration step of forming a composite by injecting a high-hardness crystalline resin composition onto the surface of the inserted ferrous material shaped article to join and integrate the ferrous material shaped article with the high-hardness crystalline resin composition.

A method for manufacturing a metal and resin composite according to Invention 13 comprises: a shaping step of mechanically shaping a ferrous material into a shaped article; a chemical etching step of immersing the ferrous material shaped article in an aqueous solution of sulfuric acid; a conversion treatment step of immersing the ferrous material shaped article that has undergone the chemical etching step in an aqueous solution containing one compound selected from among chromic acid, a permanganate salt and zinc phosphate; an insertion step of inserting the ferrous material shaped article that has undergone the conversion treatment step into an injection mold; and an integration step of forming a composite by injecting a high-hardness crystalline resin composition onto the surface of the inserted ferrous material shaped article to join and integrate the ferrous material formed-article with the high-hardness crystalline resin composition.

A method for manufacturing a metal and resin composite according to Invention 14 is the method for manufacturing a metal and resin composite according to any one of Inventions 10 to 13, wherein the high-hardness crystalline resin composition is a resin having a polyphenylene sulfide resin as a main component.

A method for manufacturing a metal and resin composite according to Invention 15 is the method for manufacturing a metal and resin composite according to any one of Inventions 10 to 13, wherein the high-hardness crystalline resin composition is a resin having a polybutylene terephthalate resin as a main component.
The elements that constitute the present invention will be explained in detail below.

### [Ferrous material]

As used in the present invention, the term of steel material denotes, for instance, carbon steels used as rolled steel materials for ordinary structures, steels for low temperature, structures plate for nuclear reactors or the like. The above include also ferrous materials widely used in mechanical parts, for instance, cold rolled steel materials (hereafter "SPCC"), hot rolled steel materials (hereafter "SPHC"), hot rolled steel plate for automotive structures (hereafter "SAPH") and hot rolled high-tensile steel plate for automobile machining (hereafter "SPFH"). Many of these steel materials can be machined by press work or cutting, hence the structure and shape thereof can be freely selected when using the steel material as a part or as a main body. The ferrous material in the present invention is not limited to the above-mentioned steel materials but includes also all ferrous materials according to standard, for example, Japanese Industrial Standards (JIS "SS400").

### [Chemical etching of ferrous materials]

Chemical etching of ferrous material is a process for generating a micron-scale roughness, as termed in the present invention, on the surface of the ferrous material. Various types of corrosion, such as general corrosion, pitting and fatigue corrosion are known to occur in ferrous materials. Appropriate etchants can be selected by undertaking trial and error testing of chemicals that elicit general corrosion. As described in literatures, for instance, "Kagaku Kogaku Benran (Handbook of Chemical Engineering)" edited by Society of Chemical Engineers of Japan, general corrosion can be broadly achieved in ferrous materials by using aqueous solutions of hydrohalic acids such as hydrochloric acid, aqueous solutions of sulfurous acid or sulfuric acid or aqueous solutions of salts of these acids. Although corrosion rates and the way in which corrosion proceeds are affected by the amount of added minor constituents such as carbon, chromium, vanadium, molybdenum or the like, general corrosion is fundamentally elicited by the above aqueous solutions. Therefore, the dipping conditions of the ferrous material need only be modified in accordance with the type of the steel material.

Specific treatment methods will be explained next. In the case of commercially available and widely used steel materials such as SPCC, SPHC, SAPH, SPFH, SS materials or the like, a degreasing agent sold for the above materials, a degreasing agent for stainless steel, a degreasing agent for aluminum alloys or a commercially available general-purpose neutral detergent is procured at first. The degreasing agent is used to prepare an aqueous solution of a concentration as per the instructions of the vendor or a concentration of several %, at a temperature of 40 to 70°C. The steel material is then immersed in the aqueous solution for 5 to 10 minutes, followed by water rinsing.

Next, the steel material is preferably immersed for a short time in a dilute aqueous solution of caustic soda in order to afford good etching reproducibility and rinsed with water thereafter. The above processes make up a so-called preliminary basic washing step. In the case of SPCC, aqueous solution of sulfuric acid with a concentration of about 10% is prepared to be at 50°C and the steel is etched through immersion in the aqueous solution for several minutes, whereby micron-scale roughness can be obtained. SPHC, SAPH and SPFH have greater corrosion resistance than SPCC, hence the temperature of the solution for etching is raised above that of SPCC. Aqueous solutions of hydrohalide acids such as hydrochloric acid are also suitable for etching but in this case part of the acid in the aqueous solution evaporates when used and may corrode surrounding ferrous structures. The exhaust gas evacuated locally, moreover, must be treated somehow. In terms of cost, therefore, it is preferable to use an aqueous solution having sulfuric acid as a main component.

### [Surface treatment of ferrous materials: water rinsing and forced drying method]

After chemical etching, the steel is rinsed with water and dried and is then observed with the electron microscope in magnification of 10,000 times and 100,000 times. The micrographs show configuration with an endless succession of steps having a height and length of 50 to 500 nm and a width of several hundred to several thousand nm. Although the results depend on the type of ferrous material, the surface appears to be covered with a configuration of endless succession of steps having a height and length of 80 to 200 nm and a width of several hundred to several thousand nm or a configuration of endless succession of steps having a height and length of 50 to 100 nm and a width of several hundred to several thousand nm. The configuration obtained after chemical etching of ordinary steel materials could often be described as a peculiar step-like fine texture that is wholly different from the fine surface structures obtained after chemical etching in other metal alloys previously studied by the inventors, such as aluminum alloys, titanium alloys, copper alloys, stainless steel and the like.

Moreover, the level difference (height) of the steps, the width (length) of the steps and so forth varied as described above depending on the type of steel material, i.e. depending on, for instance, chemical composition and modifications (procedure of thermal treatment or rolling). Saying in total inclusiveness, the chemical etching operation alone using an aqueous solution of sulfuric acid allows formation of micron-scale roughness and formation of fine irregularities (fine irregularities shaped as an endless succession of steps having a height and length of 50 to 500 nm and a width of several hundred to several thousand nm) to be accomplished simultaneously. In concrete practice, it is necessary to use aqueous solution of sulfuric acid under appropriate conditions that involve, for instance, adding another suitable component to the solution to impart thereby a special etching effect and also modifying the temperature of the aqueous solution and the immersion time.

### [Surface treatment of ferrous materials I: method based on the NMT hypothesis (method based on adsorption of amine-based molecules)]

After the above chemical etching, the steel is rinsed with water and then immersed in ammonia, hydrazine or a water-soluble amine compound, followed by water rinsing and drying. A ferrous material shaped article appropriate for injection joining can be obtained thereby. The electron microscopy observations made by the inventors revealed that, although the surface configuration does not vary substantially as a result of immersion in an aqueous solution of an amine compound, some indefinite shaped adhering material was nonetheless observed. There is a clear difference in appearance of the adhering material between in the case of treatment with an aqueous solution of ammonia and in the case of treatment with an aqueous solution of hydrazine. Therefore, iron amine complexes may be considered to have been formed in actuality, hence the expression chemical adsorption may not be necessarily appropriate. Observation of nitrogen atoms by XPS gives support to the conclusion that amine complexes have been formed. At this stage, therefore, the disclosure of the present invention uses the expression "chemical adsorption" under the consideration that it is appropriate.

Immersion in a dilute aqueous solution of ammonia, hydrazine or a water-soluble amine compound proved to distinctively enhance at least characteristics relating to injection joining. As shown in the working examples, when only chemical etching was carried out, followed by drying to yield steel material pieces without further modification, and these steel material pieces were joined by injection joining based on the "new NMT" hypothesis, high-strength joined products were tentatively obtained but the joining strength thereof dropped abruptly after several days or weeks. The fine-texture structure of the steel material deviated substantially from the level of "irregularities having a period of 50 nm", as actually anticipated by the "new NMT" hypothesis of the inventors, toward larger side, thus difficulties in obtaining remarkably strong joined products were to be expected. A further anticipated problem was the lack of sufficient corrosion resistance in the natural oxide film of the steel material. Accordingly, the results were in line with what was expected.

Moisture penetrates through joining boundary lines and intrudes into the natural oxide layer in the joining surface. This was expected to result in a loss of joining strength over time. However, as for products joined by injection joining of SPCC, having adsorbed thereto an amine in a broad sense, i.e. ammonia, hydrazine or a water-soluble amine, no change was observed vis-à-vis initial values at least in a tensile breaking test carried out after having left the products to stand for weeks (test environment: December 2006 to February 2007 in Suehiro-cho, Ota-city, Gunma-prefecture, at a site roofed but with thorough renewal of outer air, which made the environment substantially similar as an outdoor environment).

One reasoning that may help explaining the above phenomenon lies in the consideration that when amines are adsorbed onto a finely textured surface the adsorbed amines react with the injected resin (PBT, PPS or the like) and the crystallization i.e. solidification of the resin is delayed, which makes it easier for the injected resin to penetrate all the way down into the fine irregularities. This corresponds to the "NMT" hypothesis. A concern to be had for injection joining of a steel material and a resin based on "NMT" is that amines on the surface of the steel material may be taken away by the resin, thus the surface of the steel material can be expected to undergo corrosion on account of expansion through intrusion and diffusion of water molecules after joining.

If the adsorbed amines are effective, the resin penetrates fairly down into the fine recesses of the ultrafine irregularities that make up the inner wall face of the recesses, whereby the speed with which water molecules intrude after joining can be restrained. The corrosion rate of the steel material surface ought to be restrained as a result. How long the joining strength is preserved, however, has to be determined based on the results of various durability tests over time. To learn the ultimate durability of products obtained by injection joining of SPCC (cold rolled steel plate) pieces treated in accordance with the "NMT" method with a PPS resin, the inventors coated an integrated product with a baking paint for metals and baked it, left the product, which was coated and baked, to stand indoors for one month, then caused the product to be subjected to a salt spray test for 24 hours and dried it. After further having left to stand indoors over 1 month, the integrated product was subjected to a tensile breaking test to ascertain the shear breaking strength of the product.

The results of 10 samples varied from one sample having shear breaking strength over 20 MPa, with a small difference vis-à-vis the initial value, to other samples having a shear breaking strength ranging from 5 MPa to 15 MPa. All samples exhibited interfacial breaking and fracture faces of the samples, which exhibited a low breaking strength, revealed sites at which the metal portion was exposed and, in addition, partially stained with red rust. Thus, "NMT" injection joining of steel materials results in durability clearly poorer than that of "NMT" injection joining of aluminum alloys. However, the feasibility of using steel materials cannot be negated, since it may be possible to preserve joining over long periods of time in non-harsh environments. Concrete measures for preserving joinability by "NMT" will be explained next.

The concentration and temperature of the aqueous ammonia, hydrazine aqueous solution or aqueous solution of water-soluble amine that is used need not be strictly controlled in most cases. Specifically, effects can be obtained through immersion in an aqueous solution having a concentration of 0.5% to several % and at an ordinary temperature for 0.5 to several minutes, followed by water rinsing and drying. It is preferable in an industrial setting to use an inexpensive aqueous ammonia solution diluted to approximately several %, though some odor may be generated, or to use several %-aqueous solution of hydrazine hydrate having little odor and delivering a stable effect.

### [Surface treatment of ferrous materials II: method based on the new NMT hypothesis (conversion treatment)]

After the above-described chemical etching, water rinsing and drying, electron microscopy in magnification of 100,000 times showed a surface covered substantially completely with ultra-fine irregularities shaped as an endless succession of steps having a height and length of 50 to 500 nm and a width of several hundred to several thousand nm. Speaking in further detail, the height and length of the steps were various in at least SPCC, SPHC, SAPH, SAPF and so forth. The fine textures lay within the required ranges for fine texture according to the "new NMT" hypothesis but all of them were somewhat large.

Specifically, the ideal fine texture level demanded by "new NMT" is that of an irregular surface having a period of 50 nm. The fine texture levels observed in the electron micrographs of the below-described examples corresponded to a wide range of periods. Therefore, the above-described method "NMT", which relies on adsorption of an amine-based substance, is preferable in terms of achieving strong injection joining. However, this is problematic as regards long-term preservation of joining strength, as described above. The method explained here was attained through exploring the prospect of solving the above problem by the "new NMT" approach, relying on a conversion treatment.

As is conventionally known, corrosion resistance of steel material can be reliably enhanced by way of a conversion treatment. Conversion treatment causes conversion treatment material to adhere to the step-like irregularity surface. This gives rise to yet finer irregularities that may come close to the ideal fine-texture surface required by "new NMT". A foreseeable issue herein is whether the joining force between the obtained conversion coating layer and the base material is strong enough or not. A weak joining force between the conversion coating and the base material can affect the injection joining strength itself.

Trial-and-error experiments conducted by the inventors on conversion treatment are not sufficient in number yet, so the treatment cannot be regarded as the best. However, methods that can be preferably used include, for instance, covering with a chromium oxide through immersion in an aqueous solution of a hexavalent chromic acid, covering with a manganese oxide through immersion in a weakly acidic aqueous solution of potassium permanganate and covering with zinc phosphate through immersion in an aqueous solution containing a zinc salt and acidified with phosphoric acid. Concrete instances of such treatments will be described in the working examples below.

### [High-hardness crystalline resin composition]

The high-hardness crystalline resin composition used in the present invention is a first resin composition whose main component is a polyphenylene sulfide resin (PPS) or a second resin composition whose main component is a polybutylene terephthalate resin (PBT). The resin fraction of the first resin composition is a resin composition having a polyphenylene sulfide resin as a main component and a polyolefin resin as an auxiliary component. The resin fraction of the second resin composition is a resin fraction having a polybutylene terephthalate resin as a main component and a polyethylene terephthalate resin and/or a polyolefin resin as an auxiliary component.

The first resin composition may contain polyphenylene sulfide resin by 70 to 97wt% and polyolefin resin by 3 to 30wt%. The second resin composition may contain polybutylene terephthalate resin by 70 to 97wt% and polyethylene terephthalate resin and/or the polyolefin resin by 3 to 30wt%. It is deemed that mixing different resins at the molecular level should allow delaying formation of micro-crystals as well as crystal growth by a short time, since molecules of the same type of resin do not meet one another straightway even at the temperature of crystallization.

Preferably, the high-hardness crystalline resin composition as the resin composition is PPS or PBT containing one or more fillers selected from among glass fibers, carbon fibers, aramid fibers and other reinforcement fibers, calcium carbonate, magnesium carbonate, silica, talc, clay and glass powder by 20 to 60wt% relative to the entire composition. Adding these fillers allows the coefficient of linear expansion of the molded resin to be kept as small as possible, ranging from 2 to 3×10⁻⁵°C⁻¹.

### [High-hardness crystalline resin composition/PPS]

The PPS resin composition will be explained next. A composite having particularly good joining strength can be obtained when the composition of the resin fraction comprises PPS by 70 to 90% and a polyolefin resin by 3 to 30%. At polyolefin resin content below 3%, the effect of enhancing injection joining strength, which is afforded by the presence of the polyolefin resin, ceases to be reliable. The same is true when the polyolefin resin content exceeds 30%. In a PPS resin having added thereto more than 30% of polyolefin resin, pyrolysis of the polyolefin resin within the injection barrel of the injection molding machine gives rise to an abnormally large amount of gas, which may hinder injection molding itself.

Any PPS can be used as the PPS component, so long as it is classified as PPS. A PPS having a melt viscosity of 100 to 30,000 poise, as measured at a temperature of 315°C and under a load of 98 N (10 kgf) with a Koka type flow tester equipped with a die of 1 mm in diameter and 2 mm long, is preferable, as such a PPS affords better moldability and workability when formed into a resin composition part. The PPS may be substituted with amino groups, carboxyl groups or the like or may be copolymerized with trichlorobenzene or the like during polymerization

The PPS may have a linear or branched structure and may have undergone a thermal treatment in an inert gas. The amount of ions, oligomers and other such impurities in the PPS may be reduced by performing a deionization treatment (for instance, acid washing or hot water washing) or a washing treatment using an organic solvent such as acetone, before or after thermal curing. Also, curing of the PPS may be promoted by performing a thermal treatment in an oxidizing gas, once the polymerization reaction is over.

The polyolefin resin is an ethylene resin, propylene resin or other such resin ordinarily known as a polyolefin resin and may be a commercially available product. Preferred among the foregoing are maleic anhydride-modified ethylene copolymers, glycidyl methacrylate-modified ethylene copolymers, glycidyl ether-modified ethylene copolymers, ethylene alkyl acrylate copolymers or the like, since they yield composites having particularly good bondability.

Examples of maleic anhydride-modified ethylene copolymers that can be used include, for instance, maleic anhydride graft-modified ethylene polymers, maleic anhydride-ethylene copolymers, ethylene-acrylate-maleic anhydride terpolymers and the like. Particularly preferred among the foregoing are ethylene-acrylate-maleic anhydride terpolymers, as these allow obtaining superior composites. Concrete examples of ethylene-acrylate-maleic anhydride terpolymers include, for instance, "Bondine (by Arkema)".

For instance, glycidyl methacrylate graft-modified ethylene polymers and glycidyl methacrylate-ethylene copolymers can be used as the glycidyl methacrylate-modified ethylene copolymers. Particularly preferred among the foregoing are glycidyl methacrylate-ethylene copolymers, as these allow superior composites to be obtained. Specific examples of glycidyl methacrylate-ethylene copolymers include, for instance, "Bondfast by Sumitomo Chemical (Tokyo, Japan)". Examples of glycidyl ether-modified ethylene copolymers that can be used include, for instance, glycidyl ether graft-modified ethylene copolymers and glycidyl ether-ethylene copolymers. Specific examples of ethylene-alkyl acrylate copolymers include, for instance, "Lotryl by Arkema".

In terms of further improving the joinability between the resin composition and the ferrous material shaped article, the resin composition of the composite according to the present invention preferably has blended therein 0.1 to 6 parts by weight of a functional isocyanate compound and/or 1 to 25 parts by weight of an epoxy resin relative to a total 100 parts by weight of resin fraction, which includes 70 to 97 parts by weight of PPS and 3 to 30 parts by weight of polyolefin resin. A commercially available non-blocked or blocked polyfunctional isocyanate compound can be used as a polyfunctional isocyanate compound.

Examples of polyfunctional non-blocked isocyanate compounds include, for instance, 4,4'-diphenylmethane diisocyanate, 4,4'-diphenylpropane diisocyanate, toluene diisocyanate, phenylene diisocyanate and bis(4-isocyanate phenyl)sulfone. Exemplary polyfunctional blocked isocyanate compounds have two or more isocyanate groups per molecule, in which the isocyanate groups react with a volatile active hydrogen compound, thereby becoming inert at normal temperature.

The type of polyfunctional blocked isocyanate compound is not particularly limited but the compound has ordinarily a structure in which the isocyanate groups are masked by a blocking agent such as an alcohol, a phenol, ε-caprolactam, an oxime or an active methylene compound. An example of a polyfunctional blocked isocyanate is Takenate (by Mitsui Takeda Chemical).

The epoxy resin used can be any commonly known type such as a bisphenol A type or a cresol novolac type. An example of a bisphenol A type epoxy resin is Epikote (by Japan Epoxy Resin), while an example of a cresol novolac type epoxy resin is Epiclon (by Dainippon Ink & Chemicals).

### [High-hardness crystalline resin composition/PBT]

The PBT resin composition will be explained next. Preferably, the composition of the resin fraction comprises not only the above-mentioned filler but also PET and/or a polyolefin resin by 3 to 30wt% and PBT by 70 to 97wt%. Injection joining strength is superior in a PBT resin composition in which PBT is the main component and PET and/or a polyolefin resin is an auxiliary component. The same polyolefin resins as those listed above for the PPS resin composition can be used herein.

Joining strength is highest when the PET and/or polyolefin resin component accounts for 5 to 20wt%, although joining strength does not become so low when the PET and/or polyolefin resin component accounts for 3 to 5wt% or 20 to 30wt%. However, if the amount is more than 30wt%, the effect on joining strength is impaired, while if the PET component exceeds 25wt%, ester exchange reactions within PBT are more likely to proceed at the high temperatures of the injection molding machine. This may result in a lowered strength of the resin itself. A polyolefin resin component in excess of 30wt% results in greater gas generation, thus more likely to impair moldability.

### [Composite manufacture/injection joining]

The method for manufacturing a composite of the present invention is an injection molding method in which a composite is manufactured by inserting a metal shaped article into a metallic mold for injection molding and by injecting a resin composition, as follows. A metallic mold for injection molding is prepared, the mold is opened and a ferrous material shaped article obtained through the above-described treatment is inserted into the mold. After insertion, the mold is closed and a thermoplastic resin composition of PBT or PPS is injected. After solidification the mold is opened, demolded and the composite is removed.

Conditions for injection will be explained next. The mold temperature is preferably 100°C or higher, more preferably 120°C or higher for PBT resin or PPS resin, since in that case the influence on resin strength after solidification is particularly small and the production efficiency of the composite is excellent. The injection temperature, injection pressure and injection rate are not particularly different from those of ordinary injection molding. If anything, the injection pressure and the injection rate lie preferably on the high side.

### [Applications]

Application of the present invention in various fields affords advantages that were difficult to achieve in conventional joining, such as better part joinability, improved productivity, higher efficiency and an expanded range of applications. The present invention allows corrosion resistance in casings of electronic equipments, electric equipments and consumer electrical equipments to be enhanced and can contribute to rationalization of manufacturing mass-produced automotive components. As a result, the present invention can play a significant role in improving productivity and performance in casings and parts used in electronic and electric equipments and in many other fields.

In the composite according to the present invention, as explained in detail above, a resin composition and ferrous material shaped article are strongly integrated together in such a manner that they do not readily come apart. A ferrous material, which is a basic material in industry, is worked to a predetermined shape and is subjected to a predetermined surface treatment. A thermoplastic resin composition having a resin fraction containing PBT by 70 to 97wt% and PET and/or a polyolefin resin by 3 to 30 wt% or a thermoplastic resin composition having a resin fraction containing PPS by 70 to 97wt% and a polyolefin resin by 3 to 30 wt% is firmly injected onto the shaped article. As a result, a composite, in which the metal and resin are integrated together with strong joining to each other, can be manufactured. The present invention can therefore be employed in a wide range of industrial applications. As described in the working examples, in particular, the present invention allows composites to be obtained, in which a resin composition is joined very solidly to high-tensile steel materials that are used in automotive structural parts and the like. Hence, the invention can contribute to simplifying of manufacturing vehicle bodies in transport equipments and to reducing associated manufacturing costs.

The present manufacturing technology of composites of ferrous material shaped articles is a joining technology applied to high-productivity injection molding technologies. Ordinary steel materials can be used in this technology, hence the technology makes it possible to mass-produce composite articles of good joining characteristics, efficiently and inexpensively.

### BRIEF DESCRIPTION OF THE DRAWINGS

Fig. 1 is a view of a mold constitution illustrating schematically the process of manufacturing a composite of a metal (ordinary steel material piece) and a resin (resin composition);
Fig. 2 is an external view illustrating schematically a composite of a metal (ordinary steel material piece) and a resin (resin composition);
Fig. 3(a) is an electron micrograph in magnification of 10,000 times of an SPCC steel plate piece etched with an aqueous solution of sulfuric acid and treated with an aqueous solution of hydrazine hydrate; Fig. 3(b) is an electron micrograph in magnification of 100,000 times;
Fig. 4(a) is an electron micrograph in magnifications of 10,000 times of an SPCC steel plate piece etched with an aqueous solution of sulfuric acid and treated with aqueous ammonia; Fig. 4(b) is an electron micrograph in magnification of 100,000 times;
Fig. 5(a) is an electron micrograph in magnification of 10,000 times of an SPCC steel plate piece etched with an aqueous solution of sulfuric acid and subjected to a conversion treatment using an aqueous solution of potassium permanganate; Fig. 5(b) is an electron micrograph in magnification of 100,000 times;
Fig. 6(a) is an electron micrograph in magnification of 10,000 times of an SPCC steel plate piece etched with an aqueous solution of sulfuric acid and subjected to a conversion treatment using an aqueous solution of chromium trioxide; Fig. 6(b) is an electron micrograph in magnification of 100,000 times;
Fig. 7 is an electron micrograph in magnification of 100,000 times of an SPCC steel plate piece etched with an aqueous solution of sulfuric acid and subjected to a conversion treatment using an aqueous solution of zinc phosphate;
Fig. 8(a) is an electron micrograph in magnification of 10,000 times of an SPHC steel plate piece etched with an aqueous solution of sulfuric acid and subjected to a conversion treatment using an aqueous solution of potassium permanganate; Fig. 8(b) is an electron micrograph in magnification of 100,000 times;
Fig. 9(a) is an electron micrograph in magnification of 10,000 times of an SAPH steel plate piece etched with an aqueous solution of sulfuric acid and subjected to a conversion treatment using an aqueous solution of potassium permanganate; Fig. 9(b) is an electron micrograph in magnification of 100,000 times;
Fig. 10 is a set of scanning curve diagrams, obtained by scanning probe microscopy, of an SPCC steel plate piece etched with an aqueous solution of sulfuric acid and subjected to a conversion treatment using an aqueous solution of potassium permanganate;
Fig. 11 is a set of scanning curve diagrams, obtained by scanning probe microscopy, of an SPHC steel plate piece etched with an aqueous solution of sulfuric acid and subjected to a conversion treatment using an aqueous solution of potassium permanganate; and
Fig. 12 is a set of scanning curve diagrams, obtained by scanning probe microscopy, of an SAPH steel plate piece etched with an aqueous solution of sulfuric acid and subjected to a conversion treatment using an aqueous solution of potassium permanganate.

### DITAILED DESCRIPTION OF EMBODIMENTS

Embodiments of the present invention will be described based on working examples.

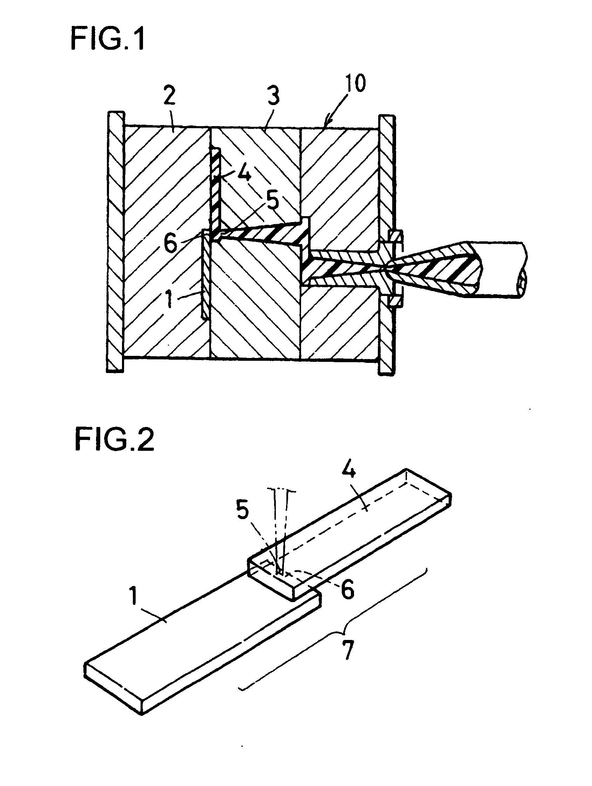

Fig. 1 and Fig. 2 are views shared by all the examples. Fig. 1 is a cross-sectional view illustrating schematically an metallic mold for injection molding 10 used in the examples. The figures illustrate the mold 10 in a closed state, during injection molding. Fig. 2 is an external view of a metal and resin composite 7 molded in the metallic mold 10. The mold 10 comprises a movable mold plate 2, a stationary mold plate 3 and a resin injector comprising a pinpoint gate 5, a runner and so forth on the side of the stationary mold plate 3.

The composite 7 is molded in accordance with the following procedure. At first, the movable mold plate 2 is opened and a steel material piece 1 is inserted into the cavity formed between the movable mold plate 2 and the stationary mold plate 3. After insertion, the movable mold plate 2 is closed, which results in the state before injection in Fig. 1. A molten resin composition 4 is then injected, via the pinpoint gate 5, into the cavity in which the steel material piece 1 has been inserted.

Upon injection, the resin composition 4 becomes joined to an end of the steel material piece 1 and fills the cavity that is not occupied by the steel material piece 1. As a result, a composite 7 is molded, in which the steel material piece 1 and the resin composition 4 (metal and resin) are integrated together. The composite 7 has a joining face 6 between the steel material piece 1 and the resin composition 4. The area of this joining face 6 is 5 mm×10 mm. Accordingly, the area of the joining face 6 is 0.5 cm². In the examples below, strength is obtained on the basis of the same surface area of the above joining face. Strength is obtained under the same conditions in the comparative examples described below. The following instruments were used for measurements and so forth in the specific working examples described below. The composite illustrated in Figs. 1 and 2 has a shape that facilitates testing for determining joining strength. Needless to say, the composite may also be of any shape employed in industry.

### (a) X-ray surface observation (XPS observation)

ESCA "AXIS-Nova (by Kratos Analytical/Shimadzu, Kyoto, Japan)" was used to observe the constituent elements to a depth of 1 to 2 nm over a surface area of several µm across.

### (b) Electron microscopy

Observations were carried out at 1 to 2 kV using an SEM electron microscope "JSM-6700F (by JEOL, Tokyo, Japan)".

### (c) Scanning probe microscopy

"SPM-9600 (by Shimadzu)" was used.

### (d) Measurement of composite joining strength

A tensile tester "Model 1323 (Aikoh Engineering, Osaka, Japan)" was used, to measure shear breaking strength at a tension speed of 10 mm/minute.
Preparative examples of the resin composition will be explained below.

### [Preparative example 1 (preparation of a PPS composition)]

A 50 L autoclave equipped with a stirrer was charged with 6,214 g of Na₂S·2.9H₂O and 17,000 g of N-methyl-2-pyrrolidone. The temperature was gradually raised to 205°C under stirring and under a nitrogen gas stream to distill 1,355 g of water off. The system was cooled to 140°C, after which 7,160 g of p-dichlorobenzene and 5,000 g of N-methyl-2-pyrrolidone were added. The system was sealed under a nitrogen gas stream. The temperature of the system was raised to 225°C over 2 hours, whereupon polymerization was performed for 2 hours at 225°C. Thereafter, the temperature of the system was raised to 250°C over 30 minutes, whereupon polymerization was performed for another 3 hours at 250°C. Once polymerization was over, the system was cooled to room temperature and the resulting polymer was separated in a centrifugal separator. The solid fraction of the polymer was repeatedly washed with warm water and was dried overnight at 100°C. The resulting PPS composition (hereinafter referred to as PPS (1)) exhibited a melt viscosity of 280 poise.

This PPS (1) was further cured for 3 hours at 250°C in a nitrogen atmosphere to yield a PPS composition (hereinafter referred to as PPS (2)). The melt viscosity of the obtained PPS (2) was 400 poise. Next, 6.0 kg of the resulting PPS (2), 1.5 kg of ethylene-acrylic ester-maleic anhydride terpolymer "Bondine TX8030 (by Arkema, Kyoto, Japan)" and 0.5 kg of epoxy resin "Epikote 1004 (by Japan Epoxy Resin, Tokyo, Japan)" were mixed uniformly beforehand in a tumbler.

Thereafter, melt kneading was carried out in a biaxial extruder "TEM-35B (by Toshiba Machine: Shizuoka, Japan))" at a cylinder temperature of 300°C, supplying glass fibers having an average fiber diameter of 9 µm and a fiber length of 3 mm "RES03-TP91 (made by Nippon Sheet Glass, Tokyo, Japan))" through a side feeder to an addition amount of 20wt%. A pelletized PPS composition (1) was obtained as a result. The obtained PPS composition (1) was dried for 5 hours at 175°C.

### [Preparative example 2 (preparation of a PPS composition)]

The PPS (1) obtained in Preparative example 1 was cured for 3 hours at 250°C in an oxygen atmosphere to yield a PPS composition (hereinafter referred to as PPS (3)). The melt viscosity of the obtained PPS (3) was 1800 poise. Next, 5.98 kg of the resulting PPS (3) and 0.02 kg of polyethylene "Nipolon Hard 8300A (by Tosoh, Tokyo, Japan))" were mixed uniformly beforehand in a tumbler.

Thereafter, melt kneading was carried out in a biaxial extruder "TEM-35B" (see above) at a cylinder temperature of 300°C, supplying glass fibers having an average fiber diameter of 9 µm and a fiber length of 3 mm "RES03-TP91" through a side feeder to an addition amount of 40wt%. A pelletized PPS composition (2) was obtained as a result. The obtained PPS composition (2) was dried for 5 hours at 175°C.

### [Preparative example 3 (preparation of a PPS composition)]

Herein, 7.2 kg of the PPS (2) obtained in Preparative example 1 and 0.8 kg of a glycidyl methacrylate-ethylene copolymer "Bondfast E (by Sumitomo Chemical, Tokyo, Japan)" were mixed uniformly beforehand in a tumbler. Thereafter, melt kneading was carried out in a biaxial extruder "TEM-35B" at a cylinder temperature of 300°C, supplying glass fibers having an average fiber diameter of 9 µm and a fiber length of 3 mm "RES03-TP91" through a side feeder to an addition amount of 20wt%. A pelletized PPS composition (3) was obtained as a result. The obtained PPS composition (3) was dried for 5 hours at 175°C.

### [Preparative example 4 (preparation of a PPS composition)]

Herein, 4.0 kg of the PPS (2) obtained in Preparative example 1 and 4.0 kg of an ethylene-acrylic ester-maleic anhydride terpolymer "Bondine TX8030 (by Arkema)" were mixed uniformly beforehand in a tumbler. Thereafter, melt kneading was carried out in a biaxial extruder "TEM-35B" at a cylinder temperature of 300°C, supplying glass fibers having an average fiber diameter of 9 µm and a fiber length of 3 mm "RES03-TP91" through a side feeder to an addition amount of 20wt%. A pelletized PPS composition (hereinafter referred to as PPS composition (4)) was obtained as a result. The obtained PPS composition (4) was dried for 5 hours at 175°C.

### [Preparative example 5 (preparation of a PBT composition)]

Herein, 4.5 kg of a PBT resin "Toraycon 1100S (by Toray)" and 0.5 kg of a PET resin "TR-4550BH (by Teijin Kasei, Tokyo, Japan)" were mixed uniformly beforehand in a tumbler. Thereafter, melt kneading was carried out in a biaxial extruder "TEM-35B" at a cylinder temperature of 270°C, supplying glass fibers having an average fiber diameter of 9 µm and a fiber length of 3 mm "RES03-TP91" through a side feeder to an addition amount of 30wt%. A pelletized PBT composition (hereinafter referred to as PBT composition (1)) was obtained as a result. The obtained PBT composition (1) was dried for 3 hours at 140°C.

### [Preparative example 6 (preparation of a PBT composition)]

Herein, 6.0 kg of PBT resin "Toraycon 1401X31 (by Toray), 0.7 kg of ethylene-acrylic ester-maleic anhydride terpolymer "Bondine TX8030 (by Arkema)" and 0.15 kg of epoxy resin "Epikote 1004 (by Japan Epoxy Resin)" were mixed uniformly beforehand in a tumbler. Thereafter, melt kneading was carried out in a biaxial extruder "TEM-35B" (by Toshiba Machine)" at a cylinder temperature of 270°C, supplying glass fibers having an average fiber diameter of 9 µm and a fiber length of 3 mm "RES03-TP91" (by Nippon Sheet Glass) through a side feeder to an addition amount of 30wt%. A pelletized PBT composition (hereafter, PBT composition (2)) was obtained as a result. The obtained PBT composition (2) was dried for 5 hours at 150°C.

### [Preparative example 7 (preparation of a PBT composition)]

Herein, 6.0 kg of a PBT resin "Toraycon 1401X31 (by Toray)", 0.5 kg of a PET resin "TR-4550BH (by Teijin Kasei)", 0.5 kg of ethylene-acrylic ester-maleic anhydride terpolymer "Bondine TX8030 (by Arkema)" and 0.1 kg of epoxy resin "Epikote 1004 (by Japan Epoxy Resin)" were mixed uniformly beforehand in a tumbler. Thereafter, melt kneading was carried out in a biaxial extruder "TEM-35B" (by Toshiba Machine)" at a cylinder temperature of 270°C, supplying glass fibers having an average fiber diameter of 9 µm and a fiber length of 3 mm "RES03-TP91"(by Nippon Sheet Glass) through a side feeder to an addition amount of 30wt%. A pelletized PBT composition (hereafter, PBT composition (3)) was obtained as a result. The obtained PBT composition (3) was dried for 5 hours at 150°C.

### [Working examples]

Working examples and comparative examples of the composite according to the present invention will be explained next.

### [Working Example 1]

A commercially available 1.6 mm-thick plate material of a cold rolled steel material "SPCC bright" was procured and was cut into 45 mm×18 mm rectangular steel material pieces. Through holes were opened at the ends of the steel material pieces and a PVC-coated copper wire was threaded through a dozen pieces and then bent in such a manner as to suspend simultaneously all the pieces and to prevent the latter from becoming stacked on one another. An aqueous solution at a temperature of 60°C containing a degreasing agent "NE-6 (by Meltex)" by 7.5% for aluminum alloys was prepared in a bath. The steel material pieces were immersed for 5 minutes in the aqueous solution and were then rinsed with tap water (Ota-city, Gunma-prefecture, Japan).

Next, the steel material pieces were immersed for 1 minute in another dipping bath of a 1.5%-aqueous solution of caustic soda at 40°C and were rinsed with water. An aqueous solution containing 98%-sulfuric acid by 10% was prepared next at 50°C in another dipping bath. The steel material pieces were immersed for 6 minutes in the aqueous solution and were then rinsed with water. Next, the pieces were immersed for 1 minute in a 3.5%-aqueous solution of hydrazine hydrate at 25°C, followed by water rinsing. The pieces were then dried for 15 minutes in a warm-air drier set to 67°C. The copper wire was removed from the steel material pieces that had been laid on clean aluminum foil. The steel material pieces were wrapped in the aluminum foil, sealed in a polyethylene bag and stored. During this operation, the fingers did not come into contact with the surfaces to be joined (other end at the side opposite to the side on which the through-holes were formed).

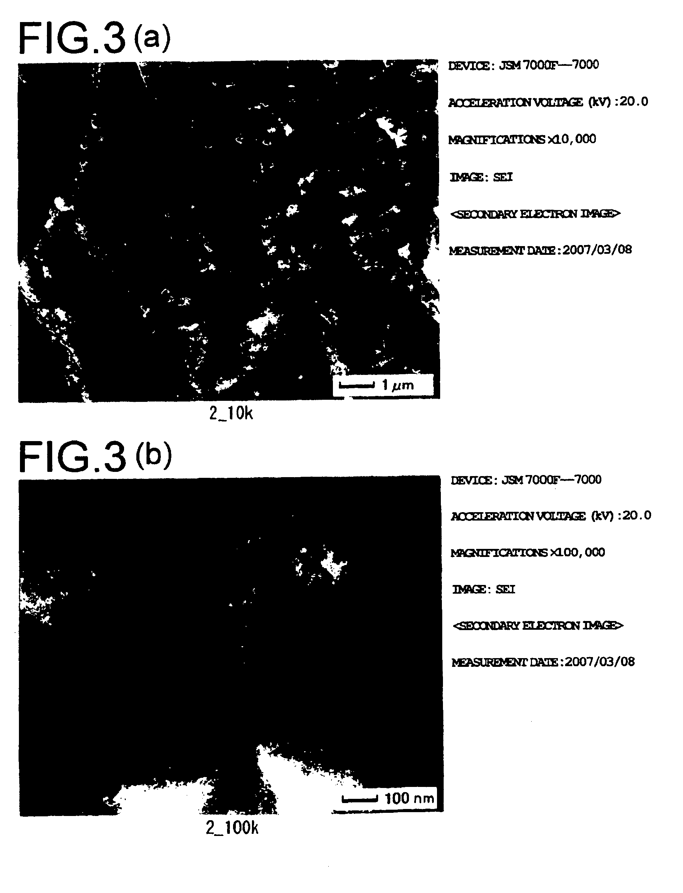

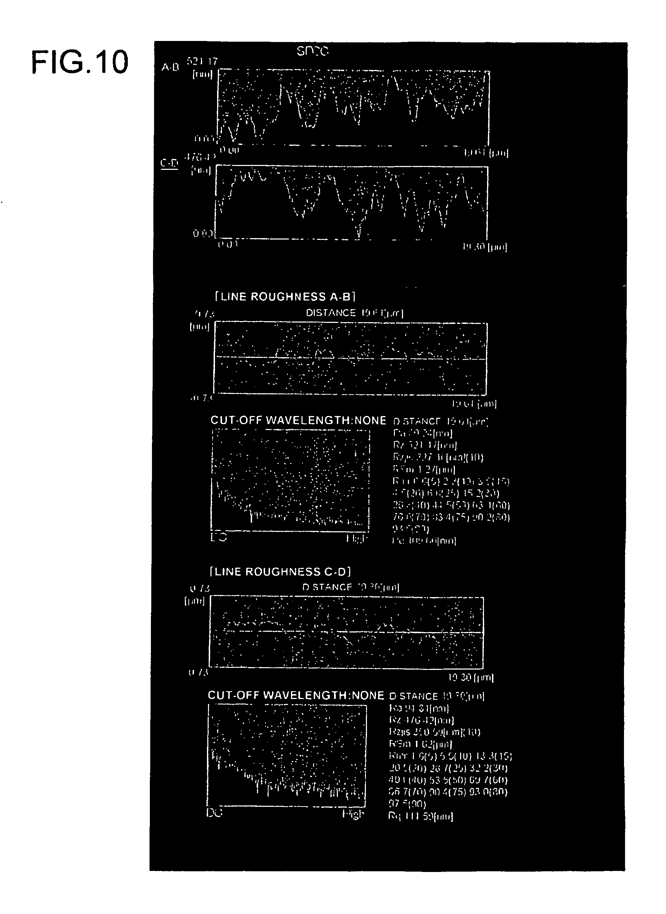

One of the steel material pieces treated in the same way underwent a scanning analysis using a scanning probe microscope. The results are illustrated in Fig. 10. The surface exhibited an average period, i.e. a peak-valley average spacing (RSm) of 1 to 2 µm and a maximum height roughness (Rz) of 0.4 to 0.5 µm according to JIS (JIS B 0601:2001). Another piece was sliced and observed under the electron microscope. Figs. 3(a) and 3(b) show micrographs obtained by observation. Fig. 3(a) shows a result of electron microscopy in magnification of 10,000 times and Fig. 3(b) shows a result of electron microscopy in magnification of 100,000 times. As can be seen in Fig. 3(b), the surface appears to be covered substantially completely with ultra-fine irregularities shaped as an endless succession of steps having a height and length of 80 to 200 nm and a width of several hundred to several thousand nm.

XPS observation revealed the presence of large amounts of oxygen, iron and carbon and small amounts of nitrogen. Just in case, "SPCC" bright itself not having been treated in any way was also subjected to an XPS analysis. The sample was checked for detection of nitrogen but no nitrogen was detected. This suggested that the nitrogen element detected above derived from hydrazine. It was thus found that hydrazine had undergone chemical adsorption

One day later, the remaining steel material pieces were taken out, the surfaces with holes (treatment surfaces) were picked up using gloves, to prevent adhesion of grease or the like, and were inserted into a metallic mold for injection molding 10. The metallic mold 10 was closed and the PPS composition (1) obtained in the Preparative example 1 was injected at an injection temperature of 310°C. The mold temperature was 140°C. 20 integrated composites 7 illustrated in Fig. 2 were obtained. The size of the resin portion was 10 mm×45 mm×5 mm. The joining face 6 was 0.5 cm² (10 mm×5 mm).

The composites 7 were annealed, on the same day of molding, by being placed for 1 hour in a hot-air dryer at 170°C. One day later, three of the obtained integrated products were subjected each to a tensile test, which yielded an average shear breaking strength of 28 MPa. The remaining integrated products were stored for 4 weeks in a factory (December 2006 in Suehiro-cho, Ota-city, Gunma-prefecture, at a site roofed but with sufficient renewal of air with outer air). Three of the integrated products were then subjected to a fracture test. The average shear breaking strength was 26 MPa. Although the shear breaking strength dropped slightly vis-à-vis the value prior to storage, the results can be regarded as substantially identical.

### [Comparative example 1]

Steel material pieces were treated, joined by injection joining and annealed in exactly the same way as in Working example 1, except that herein immersion in an aqueous solution of hydrazine hydrate was not carried out. The steel material pieces were subjected to a tensile breaking test the day after injection joining and annealing. The average for 3 pieces was 15 MPa. A tensile breaking test was performed after storage for 4 weeks, as in Example 1. The shear breaking strength was merely 5 MPa, indicative of a distinctive loss of joining strength.

### [Working example 2]

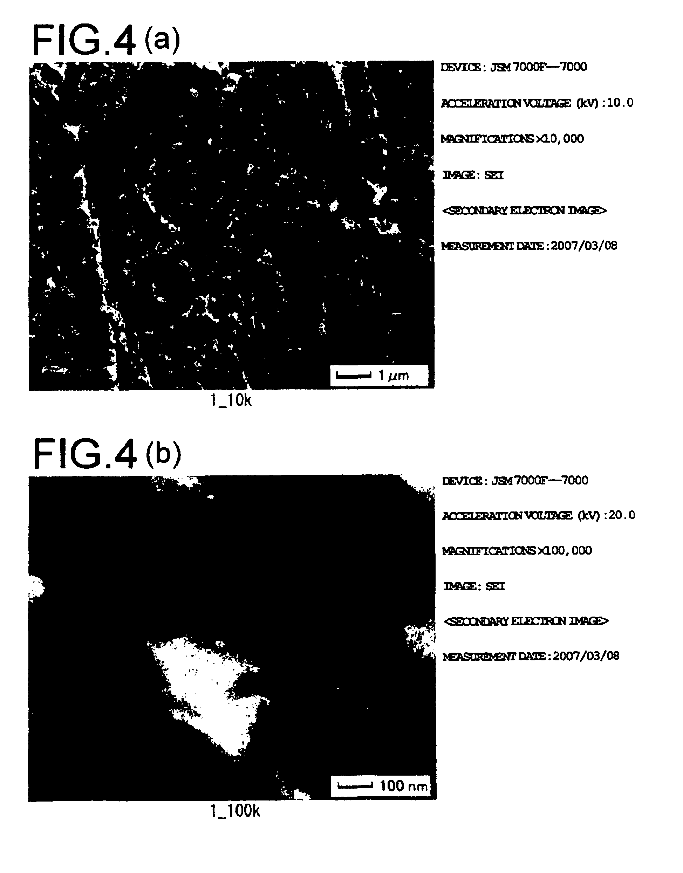

Steel material pieces were treated, joined by injection joining and tested for tensile breaking in exactly the same way as in Working example 1 except that herein 1%-aqueous ammonia at 25°C was used instead of the 3.5%-aqueous solution of hydrazine hydrate at 40°C. The average shear breaking strength for 3 pieces was 26 MPa. Figs. 4(a) and 4(b) show micrographs in magnifications of 10,000 times and 100,000 times of these steel plate pieces, respectively. Fig. 4(b) shows that, although the basic configuration is the same as in Example 1, the character of the thin skin-like substance adhering to the surface of the step-like irregularities is different from that of Example 1. The obtained steel material pieces were joined by injection joining, annealed and tested for tensile breaking in exactly the same way as in Example 1, using the PPS composition (1). The average shear breaking strength was 25 MPa.

### [Working example 3]

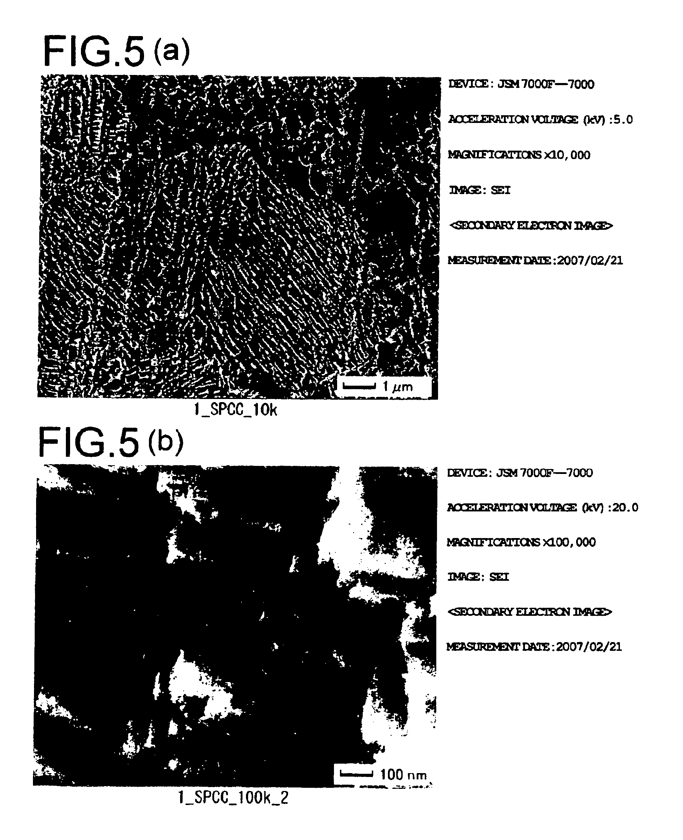

SPCC steel plate pieces were treated in exactly the same manner as in Working example 1 up to halfway. Specifically, the pieces were etched with an aqueous solution of sulfuric acid and were then rinsed with water in exactly the same way. After rinsing, the pieces were immersed for 1 minute in 1%-aqueous ammonia at 25°C, followed by water rinsing. The pieces were then immersed for 1 minute in an aqueous solution containing 2%-potassium permanganate, 1%-acetic acid and 0.5%-sodium acetate hydrate at 45°C, followed by thorough water rinsing. The pieces were dried for 15 minutes in a warm-air dryer at a temperature of 90°C. Figs. 5(a) and 5(b) show micrographs in magnifications of 10,000 times and 100,000 times of these steel plate pieces respectively. Fig. 5 shows that, although the basic configuration is the same as in Examples 1 and 2, the character of the thin skin-like substance adhering to the step-like irregularities is different from that of Example 2. A scanning analysis using a scanning probe microscope revealed a roughness having a peak-valley average spacing RSm of about 1.3 to 1.6 µm and a maximum height roughness Rz of about 0.4 to 0.6 µm. These roughness parameters were substantially identical to those of the case of SPCC in Working example 1. The obtained steel material pieces were joined by injection joining, annealed and tested for tensile breaking in exactly the same way as in Working example 1, using the PPS composition (1). The average shear breaking strength was 28 MPa.

### [Working example 4]

An experiment was carried out in exactly the same way as Working example 2 up to halfway. Specifically, "SPCC" plate pieces were degreased, subjected to a preliminary basic cleaning, etched and immersed for 1 minute in 1%-aqueous ammonia at 25°C, followed by water rinsing. Next, the pieces were immersed for 1 minute in a 1%-aqueous solution of chromium trioxide at 60°C and were then dried for 15 minutes in a warm-air dryer at 90°C. Briefly, the pieces underwent a chromic acid conversion treatment. The pieces were wrapped in aluminum foil, sealed in a polyethylene bag and stored. During this operation, the fingers did not come into contact with the surfaces to be joined (other end at the side opposite to the side on which the through-holes were formed).

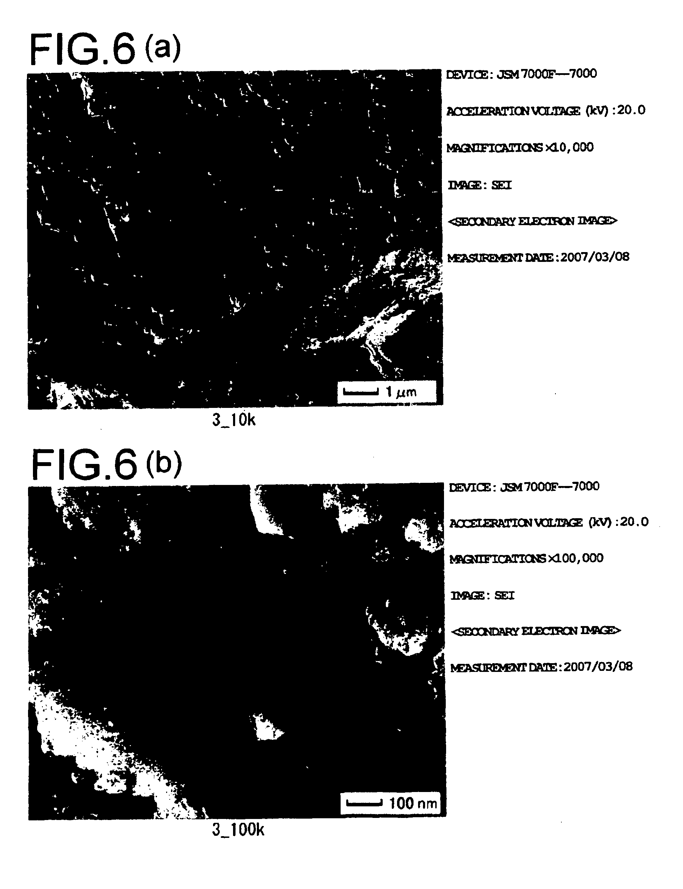

One of the steel material pieces underwent a scanning analysis using a scanning probe microscope. The surface exhibited an average period, i.e. a peak-valley average spacing (RSm) of 1.5 to 1.8 µm and a maximum height roughness (Rz) of about 0.5 µm, according to JIS (JIS B 0601:2001). The results were substantially identical to those of SPCC in Working example 1. Another piece was observed with the electron microscope. Figs. 6(a) and 6(b) show micrographs obtained by observation. Fig. 6(a) shows a result of electron microscopy in magnification of 10,000 times and Fig. 6(b) shows a result of electron microscopy in magnification of 100,000 times. Fig. 6(b) shows foreign material adhering to step-like formations. The appearance in Fig. 6(b) is clearly different from the micrographs of Example 1 (Fig. 3(b)) and slightly different also from the micrographs of Example 3 (Fig. 5(b)).

Thereafter, injection joining was carried out in exactly the same way as in Working example 1, using the PPS composition (1). The composites 7 were annealed on the same day of molding by being placed for 1 hour in a hot-air dryer at 170°C. One day later, the composites were subjected to a tensile test. The average shear breaking strength for three composites was 28 MPa. The remaining integrated products were stored for 4 weeks in a factory (December 2006 in Suehiro-cho, Ota-city, Gunma-prefecture, at a site roofed but with sufficient renewal of air with outer air). Three of the integrated products were then subjected to a breaking test. The average shear breaking strength was 26 MPa. Although the shear breaking strength dropped slightly vis-à-vis the value prior to storage, the results can be regarded as substantially identical.

### [Working example 5]

Steel material pieces were treated, joined by injection joining and tested for tensile breaking in exactly the same way as in Working example 3 except that herein an aqueous solution comprising 2%-potassium permanganate, 1%-acetic acid and 0.5%-sodium acetate hydrate at 45°C was used instead of the 1%-aqueous solution of chromium trioxide at 60°C. Figs. 6(a) and 6(b) show electron micrograph results. Fig. 6(a) shows a result of electron microscopy in magnification of 10,000 times and Fig. 6(b) shows a result of electron microscopy in magnification of 100,000 times. The results of tensile tests for 3 samples yielded an average shear breaking strength of 27 MPa.

### [Working example 6]

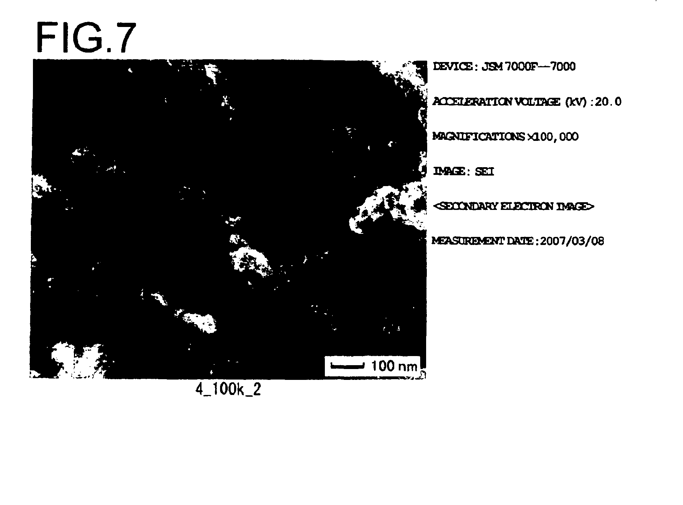

Steel material pieces were treated in exactly the same way as in Working example 5, except that herein an aqueous solution containing 0.5%-zinc nitrate hydrate and 3%-phosphoric acid at 40°C was used instead of the 1%-aqueous solution of chromium trioxide at 60°C. Fig. 7 shows an electron micrograph in magnification of 100,000 times. The pieces were joined by injection joining and subjected to a tensile breaking test in the same way as in Working example 5. The results of tensile tests for 3 samples yielded an average shear breaking strength of 27 MPa.

### [Comparative example 2]

Composites 7 were obtained by treating steel material pieces and carrying out injection molding in exactly the same way as in Working example 1, except that herein the PPS composition (2) obtained in Preparative example 2 was used instead of the PPS composition (1) obtained in Preparative example 1. The obtained composites 7 were annealed for 1 hour at 170°C. In brief, in the experiment a PPS resin composition comprising only a filler and PPS with a very small amount of polyolefin polymer was used. One day later, 10 of the composites 7 were subjected to a tensile test. The average shear breaking strength was 5 MPa. The difference in the materials of the resin composition that was used accounted for the substantial disparity of the results as compared with those of Working example 1.

### [Working example 7]

Composites 7 were obtained in exactly the same way as in Working example 1 except that the PPS composition (3) obtained in Preparative example 3 was used instead of the PPS composition (1) obtained in Preparative example 1. The composites were annealed for 1 hour at 170°C on the day of molding. Two days later, the shear breaking strength of the composites 7 was measured in a tensile test, which yielded an average of 17 MPa.

### [Comparative example 3]

Composites were attempted to be manufactured in exactly the same way as in Working example 1 except that the PPS composition (4) obtained in Preparative example 4 was use instead of the PPS composition (1). In the experiment a PPS resin composition containing a substantial amount of polyolefin polymer was used. However, a large amount of gas was generated during molding, thus molding was discontinued. The main component of the resin composition in this experiment was not PPS.

### [working example 8]

Steel material pieces 1 were prepared and injection molding was carried out in exactly the same way as in Working example 1 to yield composites 7, except that herein the PBT composition (1) obtained in Preparative example 5 was used instead of the PPS composition (1) obtained in Preparative example 1. Specifically, the injection temperature was 280°C, the mold temperature was 140°C and the annealing conditions of the obtained composites 7 involved annealing at a temperature of 150°C for 1 hour. One day later, the composites 7 were subjected to a tensile test, which yielded an average shear breaking strength of 18 MPa for four composites.

### [Working example 9]

Steel material pieces 1 were prepared and injection molding was carried out in exactly the same way as in Working example 6 to yield composites 7, except that herein the PBT composition (2) obtained in Preparative example 6 was used instead of the PBT composition (1) obtained in Preparative example 5. The annealing conditions of the obtained composites 7 were the same. One day later, the composites 7 were subjected to a tensile test, which yielded an average shear breaking strength of 15 MPa for four composites.

### [Working example 10]

Steel material pieces 1 were prepared and injection molding was carried out in exactly the same way as in working example 6 to yield composites 7, except that herein the PBT composition (3) obtained in Preparative example 7 was used instead of the PBT composition (1) obtained in Preparative example 5. The annealing conditions of the composites 7 were the same. One day later, the composites 7 were subjected to a tensile test, which yielded an average shear breaking strength of 17 MPa for four composites.

### [Working example 11]

A commercially available 1.6 mm-thick hot rolled steel "SPHC" plate material was procured and was cut into multiple 18 mmx45 mm rectangular steel material pieces. Through holes were formed at the ends of the steel material pieces, a PVC-coated copper wire was threaded through a dozen pieces and then was bent in such a manner as to suspend simultaneously all the pieces and to prevent the latter from becoming stacked on one another. An aqueous solution at a temperature of 60°C containing a degreasing agent "NE-6 (by Meltex)" for aluminum alloys by 7.5% was prepared in a bath. The steel material pieces were immersed for 5 minutes in the aqueous solution and then rinsed with tap water (Ota-city, Gunma-prefecture).

Next, an aqueous solution containing 98%-sulfuric acid by 10% was prepared at 65°C in another dipping bath. The steel material pieces were immersed for 5 minutes in the aqueous solution and were then rinsed with water. The pieces were immersed next for 1 minute in 1%-aqueous ammonia at 25°C, followed by water rinsing. The pieces were then immersed for 1 minute in an aqueous solution containing 2%-potassium permanganate, 1%-acetic acid and 0.5%-sodium acetate hydrate at 45°C, followed by water rinsing. The pieces were dried for 15 minutes in a warm-air dryer at a temperature of 90°C. The copper wire was removed from the steel pieces that had been laid on clean aluminum foil. The steel material pieces were wrapped in the aluminum foil, sealed in a polyethylene bag and stored. During this operation, the fingers did not come into contact with the surfaces to be joined (other end at the side opposite to the side on which the through-holes were formed).

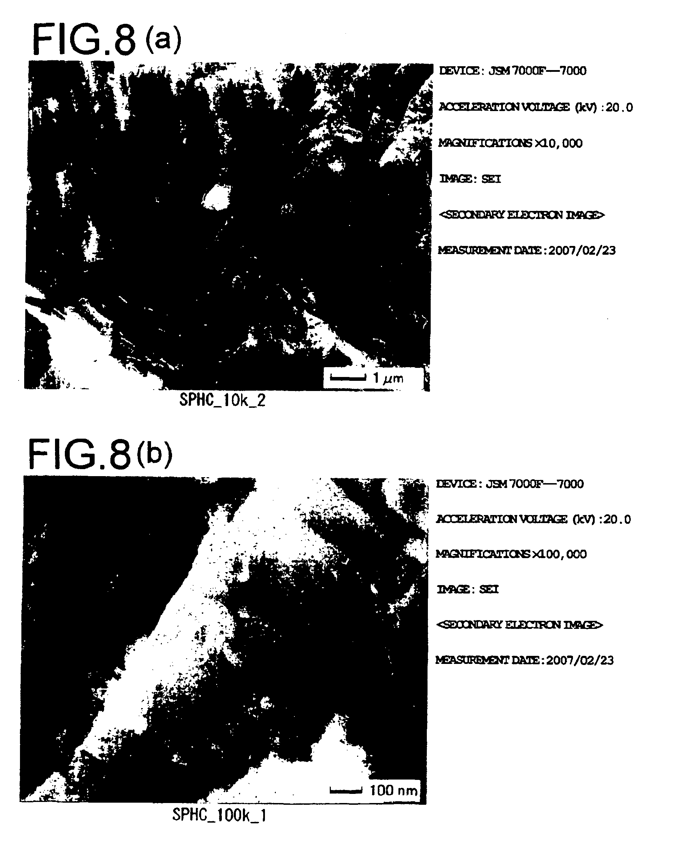

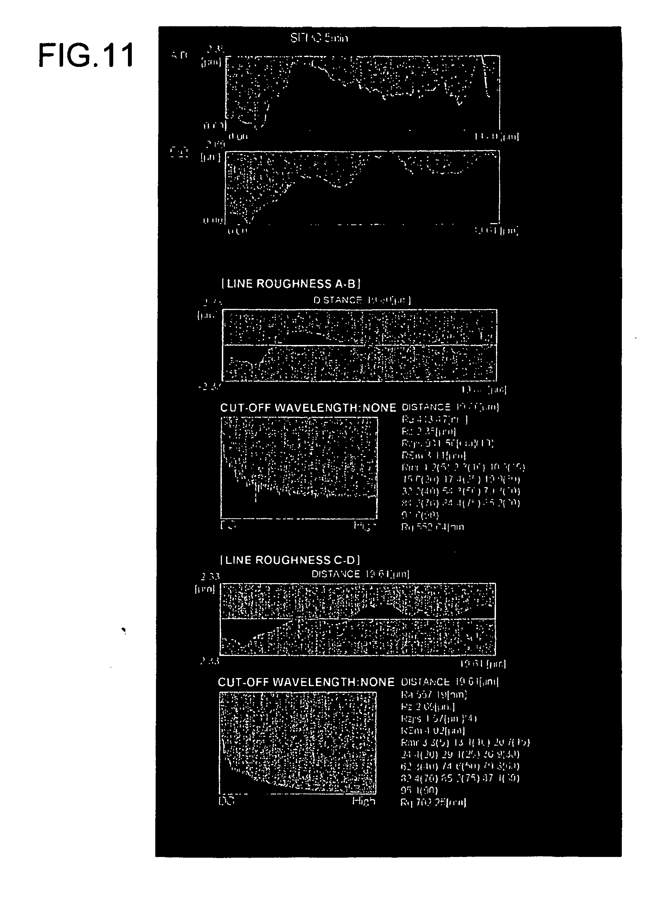

One of the steel material pieces treated in the same way underwent a scanning analysis using a scanning probe microscope. The results are shown in Fig. 11. The surface exhibited an average period, i.e. a peak-valley average spacing (RSm) of 3 to 4 µm and a maximum height roughness (Rz) of 2 to 3 µm, according to JIS (JIS B 0601:2001). Another piece was sliced and observed under the electron microscope. Figs. 8(a) and 8(b) show micrographs obtained by observation. Fig. 8(a) shows a result of electron microscopy in magnification of 10,000 times and Fig 8(b) shows a result of electron microscopy in magnification of 100,000 times. The character of the fine irregularities shown in Fig. 8(b) differed only slightly from that of Fig. 5(b). This indicated that the effect elicited by the conversion treatment was similar.

The remaining steel material pieces were taken out and were joined by injection joining using the PPS composition (1). The obtained composites 7 were annealed on the same day of molding by being placed for 1 hour in a hot-air dryer at 170°C. One day later, the composites were subjected to a tensile test. The average shear breaking strength was 25 MPa.

### [Working example 12]

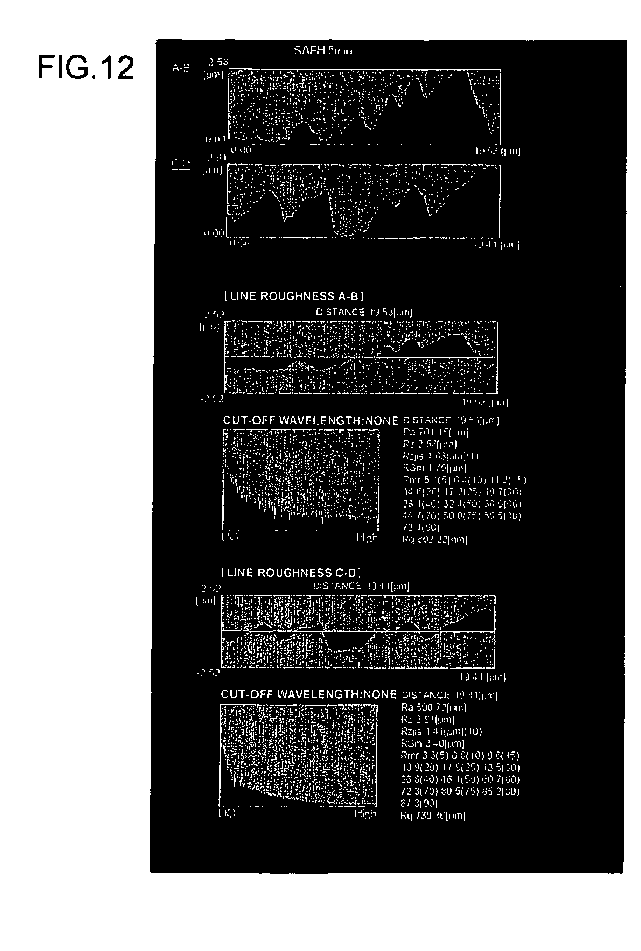

A commercially available 1.6 mm-thick plate material of hot rolled steel plate for automobiles "SAPH 440" was procured and was cut into multiple 18 mm×45 mm rectangular steel material pieces. An experiment was carried out in exactly the same way as in Working example 10, except that herein the "SAPH 440" pieces was used instead of the "SPHC" pieces. After the same treatment, one of the pieces underwent a scanning analysis using a scanning probe microscope. The results are shown in Fig. 12. The surface exhibited an average period, i.e. a peak-valley average spacing (RSm) of 2 to 4 µm and a maximum height roughness (Rz) of 2.5 to 3 µm, according to JIS.

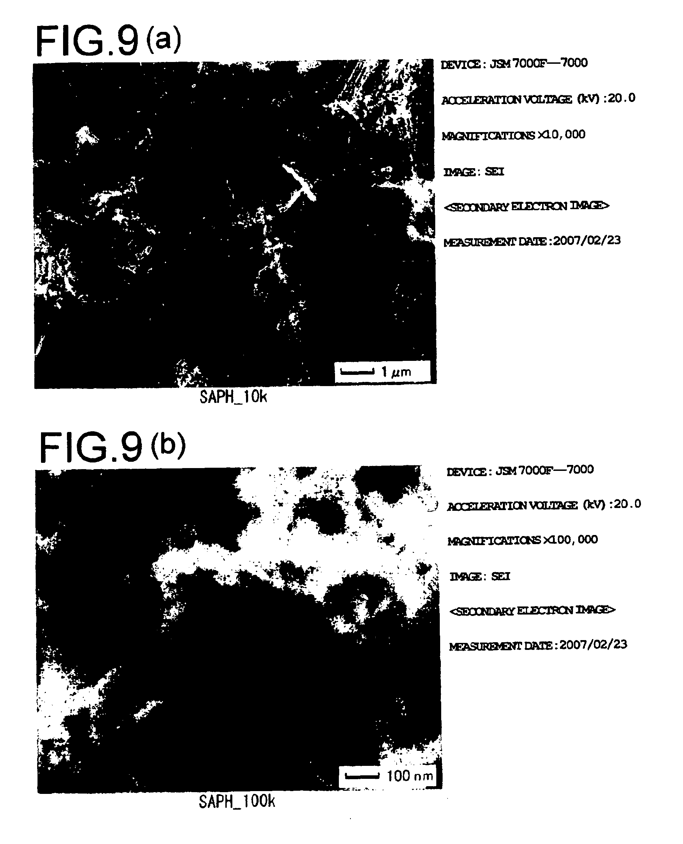

Another piece was sliced and observed with the electron microscope. Figs. 9(a) and 9(b) show micrographs obtained by observation. Fig. 9(b) shows a result of electron microscopy in magnification of 100,000 times. Fig. 9(a) shows step-like fine irregular units that are fairly finer than those of SPCC and SPHC. The surface appeared to be an endless succession of steps having a height and length of about 100 nm and a width of several thousand nm. The character of the fine irregularities in Fig. 9(b) differed only slightly from that of Fig. 5(b). This indicated that the effect elicited by the conversion treatment was similar. Thereafter, injection joining, annealing and a tensile breaking test were carried out in exactly the same way as in Working example 1. The average shear breaking strength was 27 MPa.

### [Wrking example 13]

Herein, five 1.6 mmx45 mm×18 mm SPCC steel material pieces were subjected to a solution treatment and were joined by injection joining using the PPS composition (1) in the same way as in "Working example 3 to yield five integrated products. The composites were coated with a baking paint for metals "Omac N-black (by Ohashi Chemical Industries)" to be a target coating thickness of 20 µm, followed by curing through baking for 0.5 hours at 180°C. On the seventh day after paint baking, the composites were subjected to a salt spray test for 24 hours at 35°C using 5% salt water. The composites were then rinsed with water and were left to stand for a further 7 days. The shear fracture strength of the composites was measured in tensile fracture tests, which yielded an average of 25 MPa. In terms of data variability, the bonding strength compared favorably with that of Example 3.

### [Working example 14]

A commercially available 1.0 mm-thick high-tensile steel material "DP590 (by NSC)" was procured and was cut into multiple 18 mmx45 mm rectangular steel material pieces. Through-holes were formed at the ends of each "DP590" steel material piece and then a PVC-coated copper wire was threaded through the steel material pieces and bent in such a manner so as to suspend all the steel material pieces on the same copper wire and to prevent the latter from becoming stacked on one another.

An aqueous solution at a temperature of 60°C containing a degreasing agent "NE-6 (by Meltex)" for aluminum alloys by 7.5% was prepared in a bath. The steel material pieces were immersed for 5 minutes in the aqueous solution and were then rinsed with tap water (Ota-city, Gunma-prefecture, Japan). In another dipping bath an aqueous solution at 65°C containing 1%-ammonium monohydrogen difluoride and 10%-sulfuric acid was prepared. The steel material pieces were immersed for 2 minutes in the aqueous solution and were then rinsed with deionized water. In another bath 1%-aqueous ammonia at 25°C was prepared, in which the steel material pieces were immersed for 1 minute, followed by rinsing with deionized water.

An aqueous suspension containing 1.2%- phosphoric acid, 0.21%-zinc oxide, 0.16%-sodium fluorosilicate and 0.23%-basic nickel carbonate was prepared meanwhile. The temperature of the suspension was brought to 70°C and the suspension was heated under stirring for 2 hours. Thereafter, the temperature was brought to 55°C to prepare a zinc phosphate-type conversion treatment solution. The steel material pieces were immersed for 2 minutes in the conversion treatment solution and were then thoroughly rinsed with deionized water. The pieces were dried for 15 minutes in a hot-air dryer at a temperature of 90°C. After drying, the steel material pieces were used for injection joining with the PPS composition (1), annealing and subsequent tensile breaking test in exactly the same way as in Working example 1. The average shear breaking strength was 25 MPa.

### [Working example 15]

A commercially available SS400 steel material was milled and was cut into multiple 18 mmx45 mm×1.6 mm rectangular steel material pieces. Through-holes were formed at the ends of each "SS400" steel material piece and then a PVC-coated copper wire was threaded through the steel material pieces and bent in such a manner so as to suspend all the steel material pieces on the same copper wire and to prevent the latter from becoming stacked on one another.

An aqueous solution at a temperature of 60°C containing a degreasing agent "NE-6 (by Meltex)" for aluminum alloys by 7.5% was prepared in a bath. The steel material pieces were immersed for 5 minutes in the aqueous solution and were then rinsed with tap water (Ota-city, Gunma-prefecture, Japan). In another dipping bath an aqueous solution at 65°C containing 1%-ammonium monohydrogen difluoride and 5%-sulfuric acid was prepared. The steel material pieces were immersed for 1 minute in the aqueous solution and were then rinsed with deionized water. In another bath 1%-aqueous ammonia at 25°C was prepared, in which the steel material pieces were immersed for 1 minute, followed by rinsing with deionized water.

Meanwhile an aqueous solution comprising 2%-potassium permanganate, 1%-acetic acid and 0.5%-sodium acetate hydrate was prepared. The solution was brought to a temperature of 45°C to prepare a conversion treatment solution of manganese oxide. The steel material pieces were immersed for 1 minute in the conversion treatment solution and were then thoroughly rinsed with deionized water. The pieces were dried for 15 minutes in a hot-air dryer at a temperature of 90°C. After drying, the steel material pieces were used for injection joining with the PPS composition (1) and for annealing and subsequent tensile breaking test in exactly the same way as in Working example 1. The average shear fracture strength was 26 MPa.

## Claims

1. A metal and resin composite, comprising:
a ferrous material shaped article having micron-scale roughness resulting from chemical etching, the surface being covered substantially completely with ultra-fine irregularities, and
a high-hardness crystalline resin composition, joined to and integrated with said ferrous material shaped article by injection molding,
**characterized in that**
the ultra-fine irregularities are shaped as an endless succession of steps having a height and length of 50 to 500 nm and a width of several hundred to several thousand nm and the surface being covered by a thin layer of a metal oxide or metal phosphate of a nonferrous metal.

2. The metal and resin composite according to claim 1,
wherein said high-hardness crystalline resin composition is a resin having a polyphenylene sulfide resin as a main component.

3. The metal and resin composite according to claim 1,
wherein said high-hardness crystalline resin composition is a resin having a polybutylene terephthalate resin as a main component.

4. The metal and resin composite according to claim 1,
wherein the thin layer of said metal oxide or said metal phosphate is a thin layer of one compound selected from among manganese oxide, chromium oxide and zinc phosphate.

5. The metal and resin composite according to claim 1,
wherein said chemical etching is chemical etching carried out by use of an aqueous solution of a non-oxidizing strong acid.

6. The metal and resin composite according to claim 2,
wherein the resin having said polyphenylene sulfide resin as a main component is a resin containing said polyphenylene sulfide resin by 70 to 97 wt% and a polyolefin by 3 to 30 wt%.

7. The metal and resin composite according to claim 3,
wherein said resin having said polybutylene terephthalate resin as a main component is a resin containing said polybutylene terephthalate resin by 70 to 97 wt% and a polyethylene terephthalate resin and/or a polyolefin resin by 3 to 30 wt%.

8. The metal and resin composite according to claim 1,
wherein said high-hardness crystalline resin composition is a resin composition containing one or more fillers by 20 to 60 wt% selected from among glass fibers, carbon fibers, aramid fibers, calcium carbonate, magnesium carbonate, silica, talc, clay and glass powder.

9. The metal and resin composite according to claim 1,
wherein the ferrous material shaped article has a micron-scale roughness with a peak-valley average spacing (RSm) of 1 to 10 µm and a maximum height roughness (Rz) of 0,2 to 5 µm.

10. A method for manufacturing a metal and resin composite, comprising:
a shaping step of mechanically shaping a ferrous material into a shaped article;
a liquid treatment step including a chemical etching treatment for causing the surface of said ferrous material shaped article to have an ultra-fine texture bristling with protrusions having a height, width and length of 10 nm or more, at a spacing period of 10 nm or more, and to exhibit a roughness having a maximum height difference of 0.2 to 5 µm made up of the textured surface having a period of 1 to 10 µm;
a conversion treatment step of immersing said ferrous material shaped article that has undergone said liquid treatment step in an aqueous solution containing one compound selected from among chromic acid, a permanganate salt and zinc phosphate;
an insertion step of inserting said ferrous material shaped article that has undergone said conversion treatment step into an injection mold; and
an integration step of forming a composite by injecting a high-hardness crystalline resin composition onto the surface of said inserted ferrous material shaped article to join and integrate said ferrous material shaped article with said high-hardness crystalline resin composition.

11. The method for manufacturing a metal and resin composite according to claim 10,
wherein said high-hardness crystalline resin composition is a resin having a polyphenylene sulfide resin as a main component.

12. The method for manufacturing a metal and resin composite according to claim 10,
wherein said high-hardness crystalline resin composition is a resin having a polybutylene terephthalate resin as a main component.

## Patentansprüche

1. Verbundstoff aus einem Metall und einem Harz, umfassend:
einen aus einem eisenhaltigen Material geformten Gegenstand mit einer Rauheit in der Mikron-Größenordnung, resultierend aus chemischem Ätzen, welche Oberfläche im wesentlichen vollständig mit ultrafeinen Unebenheiten bedeckt ist, und
eine kristalline Harzzusammensetzung hoher Härte, die mit dem aus einem eisenhaltigen Material geformten Artikel durch Spritzgießen verbunden und integriert ist,
**dadurch gekennzeichnet, dass** die ultrafeinen Unebenheiten als endlose Abfolge von Stufen geformt sind, mit einer Höhe und Länge von 50 bis 500 nm und einer Breite von einigen 100 bis einigen 1000 nm, und dass die Oberfläche durch eine dünne Schicht aus einem Metalloxid oder Metallphosphat aus einem Nichteisenmetall bedeckt ist.

2. Verbundstoff aus einem Metall und einem Harz gemäß Anspruch 1, bei welchem die kristalline Harzzusammensetzung hoher Härte ein Harz mit Polyphenylen-Sulfidharz als Hauptkomponente ist.

3. Verbundstoff aus einem Metall und einem Harz gemäß Anspruch 1, bei welchem die kristalline Harzzusammensetzung hoher härter ein Harz mit Polybutylen-Terephthalat-Harz als einer Hauptkomponente ist.

4. Verbundstoff aus einem Metall und einem Harz gemäß Anspruch 1, bei welchem die dünne Schicht aus dem Metalloxid oder Metallphosphat eine dünne Schicht aus einer Verbindung ist, die ausgewählt ist aus den folgenden: Manganoxid, Chromoxid und Zinkphosphat.

5. Verbundstoff aus einem Metall und einem Harz gemäß Anspruch 1, bei welchem das chemische Ätzen ausgeführt wird unter Verwendung einer wässrigen Lösung einer nicht oxidierenden starken Säure.

6. Verbundstoff aus einem Metall und einem Harz gemäß Anspruch 2, bei welchem das Harz mit Polyphenylen-Sulfidharz als einer Hauptkomponente ein Harz ist, welches Polyphenylen-Sulfidharz zu 70 bis 97 Gewichts-% und Polyolefin zu 3 bis 30 Gewichts-% enthält.

7. Verbundstoff aus einem Metall und einem Harz gemäß Anspruch 3, bei welchem das Harz mit Polybutylen-Terephthalat-Harz als eine Hauptkomponente ein Harz ist, welches das Polybutylen-Terephthalat -Harz zu 70 bis 97 Gewichts-% und Polyetylen-Terephthalat-Harz und/oder ein Polyolefin-Harz zu 3 bis 30 Gewichts-% enthält.

8. Verbundstoff aus einem Metall und einem Harz gemäß Anspruch 1, bei welchem die kristalline Harzzusammensetzung hoher Härte einen oder mehrere Füllstoffe zu 20 bis 60 Gewichts-% enthält, der ausgewählt ist aus den folgenden: Glasfasern, Kohlefasern, Aramidfasern, Kalziumcarbonat, Magnesiumcarbonat, Siliziumoxid, Talg, Lehm und Glaspulver.

9. Verbundstoff aus einem Metall und einem Harz gemäß Anspruch 1, bei welchem der Artikel, der aus einem eisenhaltigen Material geformt ist, eine Rauheit in der Mikron-Größenordnung mit einem durchschnittlichen Abstand zwischen Spitzen und Tälern (RSm) von 1 bis 10 µm und einer maximalen Höhenrauheit (Rz) von 0,2 bis 5 µm aufweist.

10. Verfahren zur Herstellung eines Verbundstoffs aus einem Metall und einem Harz, umfassend:
einen Formschritt des mechanischen Formens eines eisenhaltigen Materials in einen geformten Gegenstand;
einen Flüssigkeitsbehandlungsschritt, einschließlich einer chemischen Ätzbehandlung zum Versehen der Oberfläche des aus einem eisenhaltigen Material geformten Gegenstands mit einer ultrafeinen Textur mit Vorsprüngen mit einer Höhe, Breite und Länge von 10 nm oder mehr, in einem periodischen Abstand von 10 nm oder mehr, und zur Erreichung einer Rauheit mit einer maximalen Höhendifferenz von 0,2 bis 5 nm, die von der strukturierten Oberfläche in einem Abstand von 1 bis 10 µm gebildet wird;
einen Umwandlungsbehandlungsschritt des Eintauchens des aus einem eisenhaltigen Material geformten Gegenstands, der dem Flüssigkeitsbehandlungsschritt unterzogen worden ist, in eine wässrige Lösung, enthaltend eine Verbindung, die ausgewählt ist aus Chromsäure, Permanganatsalz und Zinkphosphat;
einen Einsetzschritt des Einsetzens des aus einem eisenhaltigen Material geformten Gegenstands, der dem Umwandlungsbehandlungsschritt unterzogen worden ist, in eine Spritzgussform; und
einen Integrationsschritt des Bildens eines Verbundstoffs durch Einspritzen einer kristallinen Harzzusammensetzung hoher Härte auf die Oberfläche des eingesetzten aus einem eisenhaltigen Material geformten Gegenstands, zum Verbinden und Integrieren des aus einem eisenhaltigen Material geformten Gegenstands mit der kristallinen Harzzusammensetzung hoher Härte.

11. Verfahren zur Herstellung eines Verbundstoffs aus einem Metall und einem Harz gemäß Anspruch 10, bei welchem die kristalline Harzzusammensetzung hoher Härte ein Harz ist, welches Polyphenylen-Sulfidharz als eine Hauptkomponente aufweist.

12. Verfahren zur Herstellung eines Verbundstoffs aus einem Metall und einem Harz gemäß Anspruch 10, bei welchem die kristalline Harzzusammensetzung hoher Härte ein Harz ist, welches Polybutylen-Therephtatale-Harz als eine Hauptkomponente aufweist.

## Revendications

1. Composite métal et résine, comportant :
un article façonné en un matériau ferreux ayant une rugosité à l'échelle du micron résultant d'une attaque chimique, la surface étant recouverte sensiblement complètement d'irrégularités ultra-fines, et
une composition de résine cristalline à haute dureté, reliée audit article façonné en un matériau ferreux et intégrée à celui-ci par moulage par injection,
**caractérisé en ce que**
les irrégularités ultra-fines sont formées comme une succession sans fin de pas ayant une hauteur et une longueur de 50 à 500 nm et une largeur de plusieurs centaines à plusieurs milliers de nanomètres et la surface étant recouverte par une couche mince d'un oxyde métallique ou d'un phosphate métallique d'un métal non ferreux.

2. Composite métal et résine selon la revendication 1,
dans lequel ladite composition de résine cristalline à haute dureté est une résine ayant une résine polysulfure de phénylène comme composant principal.

3. Composite métal et résine selon la revendication 1,
dans lequel ladite composition de résine cristalline à haute dureté est une résine ayant une résine téréphtalate de polybutylène comme composant principal.

4. Composite métal et résine selon la revendication 1,
dans lequel la couche mince dudit oxyde métallique ou dudit phosphate de métal est une couche mince d'un composé choisi parmi l'oxyde de manganèse, l'oxyde de chrome et le phosphate de zinc.

5. Composite métal et résine selon la revendication 1,
dans lequel ladite attaque chimique est une attaque chimique réalisée à l'aide d'une solution aqueuse d'un acide fort non-oxydant.

6. Composite métal et résine selon la revendication 2,
dans lequel la résine ayant ladite résine polysulfure de phénylène comme composant principal est une résine contenant ladite résine sulfure de polyphénylène de 70 à 97% en poids et une polyoléfine de 3 à 30% en poids.

7. Composite métal et résine selon la revendication 3,
dans lequel ladite résine de téréphtalate de polybutylène ayant ladite résine comme composant principal est une résine contenant ladite résine téréphtalate de polybutylène de 70 à 97% en poids et une résine téréphtalate de polyéthylène et/ou une résine polyoléfine de 3 à 30% en poids.

8. Composite en métal et résine selon la revendication 1,
dans lequel ladite composition de résine cristalline à haute dureté est une composition de résine contenant une ou plusieurs charges de 20 à 60% en poids choisies parmi les fibres de verre, les fibres de carbone, les fibres d'aramide, le carbonate de calcium, le carbonate de magnésium, la silice, le talc, l'argile et la poudre de verre.

9. Composite en métal et résine selon la revendication 1,
dans lequel l'article façonné en matériau ferreux a une rugosité à l'échelle du micron avec un espacement moyen pic-vallée (RSm) de 1 à 10 µm et une rugosité de hauteur maximale (Rz) de 0,2 à 5 µm.

10. Procédé de fabrication d'un composite en métal et résine, comportant :
une étape de façonnage consistant à façonner mécaniquement un matériau ferreux en un article façonné;
une étape de traitement liquide incluant un traitement d'attaque chimique pour amener la surface dudit article façonné en matériau ferreux à avoir une texture ultra-fine hérissée de saillies ayant une hauteur, une largeur et une longueur de 10 nm ou plus, selon une période d'espacement de 10 nm ou plus, et à présenter une rugosité ayant une différence de hauteur maximale de 0,2 à 5 µm constituée de la surface texturée ayant une période de 1 à 10 µm;
une étape de traitement de conversion consistant à immerger ledit article façonné en matériau ferreux qui a subi ladite étape de traitement liquide dans une solution aqueuse contenant un composé choisi parmi l'acide chromique, un sel de permanganate et un phosphate de zinc,
une étape d'insertion consistant à insérer ledit article façonné en matériau ferreux qui a subi ladite étape de traitement de conversion dans un moule d'injection, et
une étape d'intégration consistant à former un composite par injection d'une composition de résine cristalline à haute dureté sur la surface dudit article façonné en matériau ferreux pour relier ledit article façonné en matériau ferreux à ladite composition de résine cristalline à haute dureté et l'intégrer à celle-ci.

11. Procédé de fabrication d'un composite en métal et résine selon la revendication 10, dans lequel ladite composition de résine cristalline à haute dureté est une résine ayant une résine polysulfure de phénylène comme composant principal.

12. Procédé de fabrication d'un composite en métal et résine selon la revendication 10, dans lequel ladite composition de résine cristalline à haute dureté est une résine ayant une résine téréphtalate de polybutylène comme composant principal.
